# EUROPEAN PATENT APPLICATION

(11) **EP 4 135 104 A1**
(43) Date of publication of application: **15.02.2023**
(21) Application number: 22158504.5
(22) Date of filing: 24.02.2022
(51) Int. Cl.: H01M 50/103, H01M 50/119, H01M 50/133, H01M 50/209, H01M 4/131, H01M 4/485, H01M 10/04, H01M 10/0587

(54) **SECONDARY BATTERY, BATTERY PACK, AND VEHICLE**

(30) Priority: 13.08.2021 JP 2021131941
(71) Applicant: KABUSHIKI KAISHA TOSHIBA, Minato-ku Tokyo 105-0023 (JP)
(72) Inventor: Hoshina, Keigo, Tokyo, 105-0023 (JP); Namiki, Yusuke, Tokyo, 105-0023 (JP); Yoshima, Kazuomi, Tokyo, 105-0023 (JP); Yanagi, Masato, Tokyo, 105-0023 (JP); Ishibashi, Mitsuru, Tokyo, 105-0023 (JP); Harada, Yasuhiro, Tokyo, 105-0023 (JP); Takami, Norio, Tokyo, 105-0023 (JP); Watanabe, Hidetoshi, Tokyo, 105-0023 (JP); Yasuda, Kazuhiro, Tokyo, 105-0023 (JP)
(74) Representative: Hoffmann Eitle

(57) **Abstract**

According to one approach, provided is a secondary battery (100) including an electrode group (2) having a flat wound structure and a container member (1) that includes a prismatic container. The electrode group (2) includes a positive electrode (5) and a negative electrode (6) including a titanium-containing oxide. The wound structure is configured with a stack including the positive electrode (5) and the negative electrode (6) being wound. The container member (1) houses the electrode group (2) and has a pair of principal walls (30) along a principal surface (21) of the electrode group (2) . A thickness T_{PC} of the prismatic container housing the electrode group (2) in a direction intersecting with the principal walls (30), a wall thickness T1 of the prismatic container, and a thickness T_{EG} of the electrode group (2) in a state outside the prismatic container satisfy a relationship of 1 × (T_{PC} - T1 × 2) < T_{EG} ≤ 1.05 × (T_{PC} - T1 × 2) .

## Description

### FIELD

The present disclosure relates to a secondary battery, battery pack, and vehicle.

### BACKGROUND

Lithium ion batteries that are charged and discharged by lithium ions moving between a negative electrode and a positive electrode, for example, nonaqueous electrolyte batteries have been actively investigated as high energy density batteries.

A carbon material, silicon, a silicon alloy, various metal oxides, and the like are known as a negative electrode active material used for a negative electrode of a secondary battery such as a lithium ion battery. Many of such negative electrode active materials are known to show a volume change with charge and discharge of the battery. In addition, in the case of using a carbon material or a silicon (Si)-based active material, it is known that lithium dendrite is precipitated when charge and discharge are repeated.

### BRIEF DESCRIPTION OF THE DRAWINGS

FIG. 1 is a developed perspective view of an example of a secondary battery according to an approach;
FIG. 2 is a partially developed perspective view of an example of the secondary battery according to the approach;
FIG. 3 is a partially developed perspective view of an example of an electrode group included in the secondary battery according to the approach;
FIG. 4 is a plan view of an example of the secondary battery according to the approach;
FIG. 5 is a schematic cross-sectional view taken along line V-V of FIG. 4;
FIG. 6 is a schematic cross-sectional view illustrating an example of a prismatic container and an electrode group included in the secondary battery according to the approach;
FIG. 7 is a plan view illustrating measurement points in an example of the secondary battery according to the approach;
FIG. 8 is a plan view illustrating measurement points in an example of a prismatic container included in the secondary battery according to the approach; and
FIG. 9 is a plan view illustrating measurement points in an example of an electrode group included in the secondary battery according to the approach.
FIG. 10 is a block diagram showing an example of an electric circuit of a battery pack according to an approach;
FIG. 11 is a partially see-through diagram schematically showing an example of a vehicle according to an approach; and
FIG. 12 is a diagram schematically showing an example of a control system related to an electric system in the vehicle according to the approach.

### DETAILED DESCRIPTION

According to one approach, provided is a secondary battery including an electrode group having a flat wound structure and a container member that includes a prismatic container. The electrode group includes a positive electrode and a negative electrode including a titanium-containing oxide. The wound structure is configured with a stack including the positive electrode and the negative electrode being wound. The container member houses the electrode group and has a pair of principal walls along a principal surface of the electrode group. A thickness T_{PC} of the prismatic container housing the electrode group in a direction intersecting with the principal walls, a wall thickness T1 of the prismatic container, and a thickness T_{EG} of the electrode group in a state outside the prismatic container satisfy a relationship of 1 × (T_{PC} - T1 × 2) < T_{EG} ≤ 1.05 × (T_{PC} - T1 × 2) .

According to another approach, provided is a battery pack including the secondary battery according to the above approach.

According to a further other approach, provided is a vehicle including the battery pack according to the above approach.

The above approaches can provide a secondary battery and a battery pack that exhibit good life performance and high energy density, and a vehicle including the battery pack.

For a battery including a negative electrode using a negative electrode active material such as carbon or Si having a large volume change, charge and discharge are preferably performed with the battery restrained. Furthermore, dimensions of the electrode group and the inner dimensions of the container member are preferably set with the volume change of the electrode taken into consideration. On one hand, when the size of the container member is given too large a margin with respect to the increase in the volume of the electrode group, the energy density is decreased as a result. In addition, when the thickness of the container member is too large with respect to the increased thickness of the electrode group, the electrode group is not restrained, whereby the charge-discharge performance may diminish. On the other hand, when the thickness of the container member becomes too small, the negative electrode and the positive electrode easily come into contact with each other due to crimpling in the electrode group or the influence of lithium dendrite, and thus self-discharge and micro-short circuit easily occur.

Hereinafter, approaches will be described with reference to the drawings. The same reference signs are applied to common components throughout the approaches and overlapping explanations are omitted. Each drawing is a schematic view for explaining the approach and promoting understanding thereof; though there may be differences in shape, size and ratio from those in an actual device, such specifics can be appropriately changed in design taking the following explanations and known technology into consideration.

### [First Approach]

According to a first approach, a secondary battery is provided. The secondary battery includes an electrode group that has a flattened wound structure, and a container member that houses the electrode group and includes a prismatic container. The electrode group includes a positive electrode and a negative electrode including a titanium-containing oxide. The wound structure of the electrode is configured by winding a stack including the positive electrode and the negative electrode. The prismatic container has a pair of principal walls that lie along a principal surface of the electrode group. A thickness of the prismatic container, with the electrode group housed therein, in a direction intersecting with the principal walls is taken as T_{PC}. A wall thickness (plate thickness) of the prismatic container is taken as T1. A thickness of the electrode group in a state where the electrode group is outside the prismatic container is taken as T_{EG}. These thicknesses satisfy a relationship of 1 × (T_{PC} - T1 × 2) < T_{EG} ≤ 1.05 × (T_{PC} - T1 × 2).

In the secondary battery, the dimensions of the electrode group and the container member are in a relationship where the electrode group is housed in the container member in a state of being pressed against the inner wall of the container member. The thickness T_{PC} of the electrode group not housed in the container member being larger than T_{PC} - T1 × 2, that is, the thickness of the electrode group housed in the container member, indicates that within the secondary battery, the electrode group is squished by the inner wall of the prismatic container. In such a secondary battery, the electrode group including the power generating component occupies a large proportion of the internal volume of the container member, and therefore a high energy density can be obtained. In addition, while the electrode active material may expand and contract due to insertion and extraction of charge carrier ions (for example, lithium ions) during charge and discharge of the battery, the shape of the electrode group is fixed due to being restrained by the prismatic container. Therefore, the deformation of the electrode group due to charge and discharge can be suppressed, thereby hardly causing a short circuit due to crimpling in the electrode group or misalignment of the positive and negative electrodes when repeating charge and discharge. In the secondary battery including the electrode group and the container member having dimensions in which the thickness T_{EG} of the electrode group that is not housed is

1.05 × (T_{PC} - T1 × 2) or less, that is, the thickness of the electrode group in a state of not being housed is 1.05 times or less of that of the electrode group in a housed state, a state can be achieved in which the electrode group is pressed against the inner wall of the prismatic container without causing a short circuit due to crimpling in the electrode group or misalignment of the positive and negative electrodes. Therefore, with the electrode group and the prismatic container satisfying the above thickness relationship, a secondary battery exhibiting good life performance and high energy density can be obtained without impairing the resistance to self-discharge.

The secondary battery may further include an electrolyte. The electrolyte may be housed in the container member along with the electrode group. The electrolyte may be held in the electrode group.

The secondary battery may further include a separator provided between the positive electrode and the negative electrode in the electrode group.

In addition, the secondary battery may further include a negative electrode terminal electrically connected to the negative electrode and a positive electrode terminal electrically connected to the positive electrode.

The secondary battery may further include a restraining member. The restraining member restrains the secondary battery from the outside of the container member. A preferable restraining member is one that mainly pressurizes a central portion of the principal wall of the prismatic container. The form of the restraining member is not particularly limited, and for example, there may be used a restraining apparatus including a pair of plate-shaped pressurizing members and a connecting member that connects the pressurizing members. Alternatively, for example, for use in a battery pack including one or more secondary batteries, the constituent members of the battery pack may include a restraining member. Examples of the material composing the restraining member include resin and metal. The secondary battery according to the first approach may satisfy the above thickness relationship 1 × (T_{PC} - T1 × 2) < T_{EG} ≤ 1.05 × (T_{PC} - T1 × 2) between the electrode group and the prismatic container for at least one of the state of being restrained and the state of not being restrained by the restraining member. In addition, the thickness T_{EG} of the prismatic container for the secondary battery restrained by the restraining member may be equal between the state of being restrained and the state with the restraining member removed.

The secondary battery may be, for example, a lithium secondary battery. The secondary battery also includes nonaqueous electrolyte secondary batteries containing nonaqueous electrolyte(s).

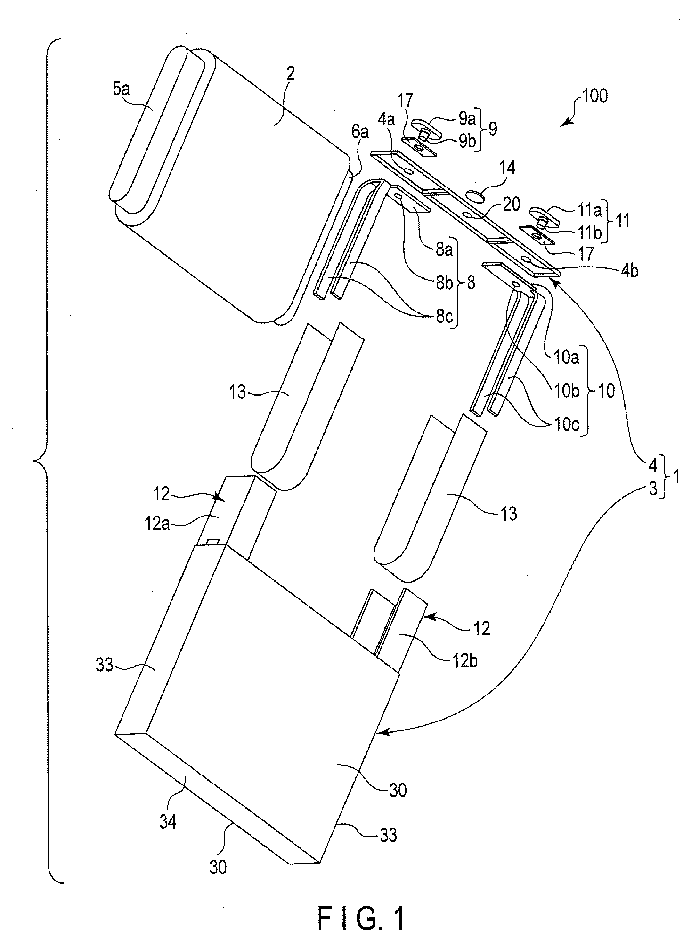

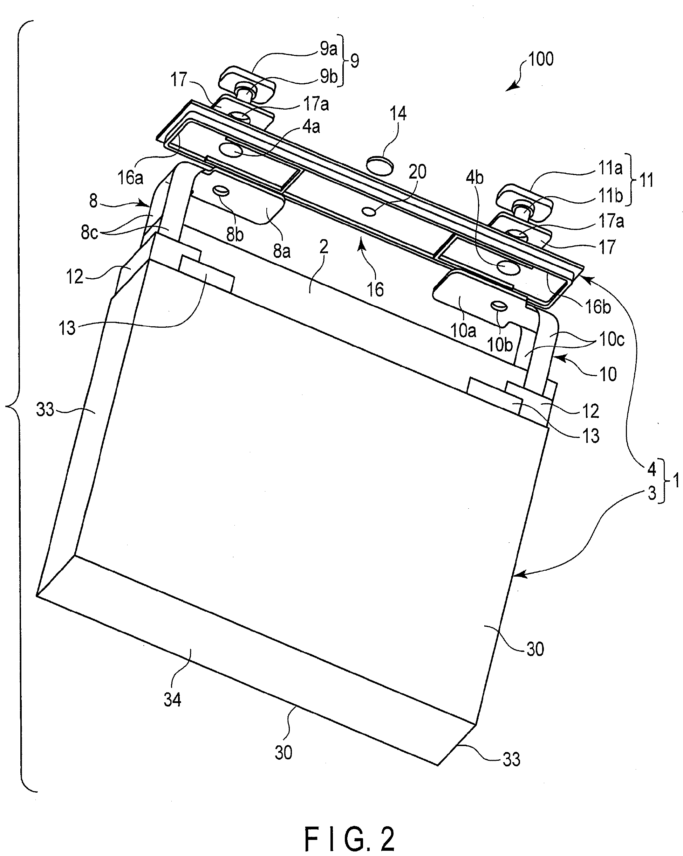

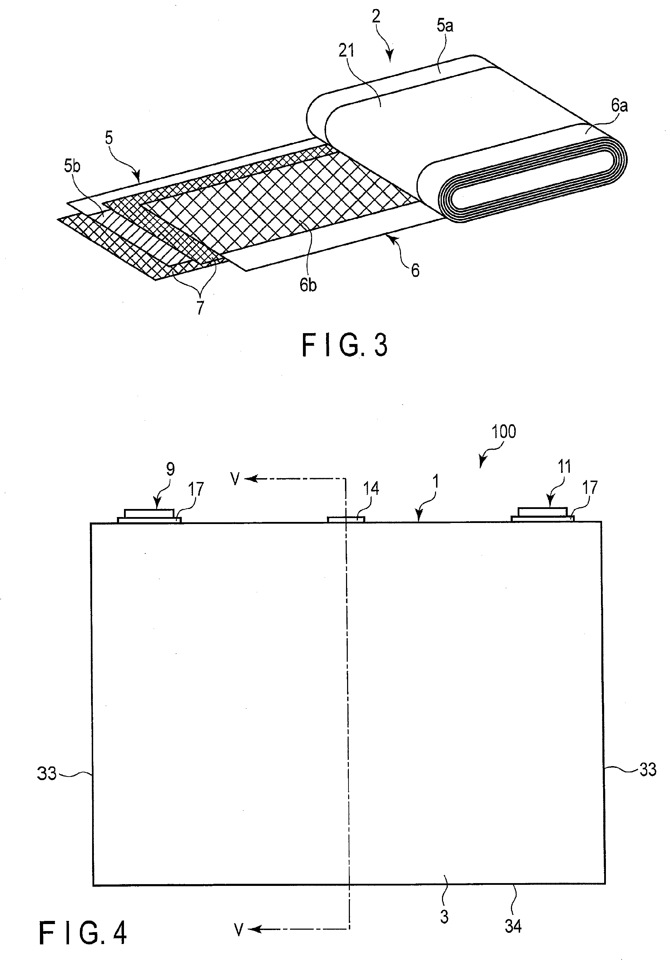

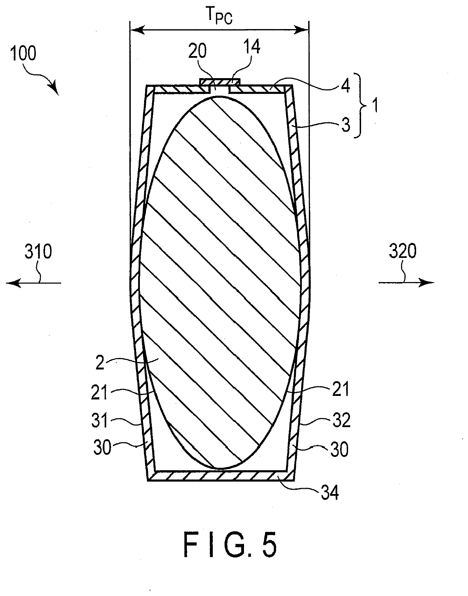

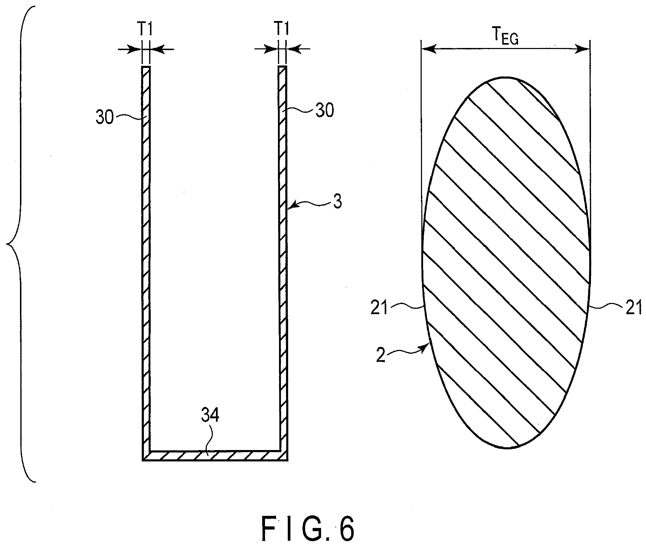

An example of a secondary battery according to a first approach will be described with reference to FIGS. 1 to 6. FIGS. 1 and 2 are a developed perspective view and a partially developed perspective view of an example of the secondary battery. FIG. 3 is a partially developed perspective view of an example of an electrode group included in the secondary battery. FIG. 4 is a plan view of an example of the secondary battery, and FIG. 5 is a schematic cross-sectional view taken along line V-V of FIG. 4. FIG. 6 is a schematic cross-sectional view illustrating an example of a prismatic container and an electrode group included in the secondary battery. The illustrated secondary battery is a sealed prismatic battery.

A secondary battery 100 includes a container member 1, a flat electrode group 2 housed in the container member 1, and an electrolyte (not shown) held by the electrode group 2. The container member 1 includes a prismatic container 3 and a sealing plate 4 fixed to an opening of the prismatic container 3 by, for example, welding. The prismatic container 3 may be, for example, a bottomed prismatic cylindrical container including metal or alloy.

In the illustrated example, the prismatic container 3 has a rectangular bottom surface 34 and two pairs of lateral walls intersecting with the bottom surface 34. The bottom surface 34 is located on the opposite side of the sealing plate 4. The two pairs of lateral walls include a pair of principal walls 30 along long sides of the bottom surface 34 as first lateral walls, and a pair of second side walls 33 along short sides of the bottom surface 34. The pair of principal walls 30 intersects with the bottom surface 34 and the sealing plate 4. One and the other of the pair of principal walls 30 face each other on the inner surface side of the prismatic container 3. The pair of second side walls 33 intersects with the bottom surface 34, the sealing plate 4, and the pair of the principal walls 30. One and the other of the pair of second side walls 33 face each other on the inner surface side of the prismatic container 3. Each of the second side walls 33 connects one and the other of the pair of the principal walls 30.

As shown in FIG. 3, the flat electrode group 2 has a structure in which a stack having a positive electrode 5 and a negative electrode 6 with a separator 7 interposed therebetween is wound in a flattened shape. The positive electrode 5 includes a strip-shaped positive electrode current collector made of, for example, a metal foil, a positive electrode current-collecting tab 5a configured from one end portion parallel to a long side of the positive electrode current collector, and a positive electrode active material-containing layer 5b formed on the positive electrode current collector excluding at least a portion of the positive electrode current-collecting tab 5a. Whereas, the negative electrode 6 includes a strip-shaped negative electrode current collector made of, for example, a metal foil, a negative electrode current-collecting tab 6a configured from one end portion parallel to a long side of the negative electrode current collector, and a negative electrode active material-containing layer 6b formed on the negative electrode current collector excluding at least a portion of the negative electrode current-collecting tab 6a.

The positive electrode 5, the separator 7, and the negative electrode 6 are wound with the positions of the positive electrode 5 and the negative electrode 6 shifted so that the positive electrode current-collecting tab 5a protrudes from the separator 7 in the winding axis direction of the electrode group and the negative electrode current-collecting tab 6a protrudes from the separator 7 in the opposite direction thereto. By such winding, as shown in FIG. 3, in the electrode group 2, the spirally wound positive electrode current-collecting tab 5a protrudes from one end surface, and the spirally wound negative electrode current-collecting tab 6a protrudes from the other end surface.

As shown in FIGS. 1 and 2, a positive electrode lead 8 includes a connection plate 8a for electrically connecting with a positive electrode terminal 9, a through hole 8b opened in the connection plate 8a, and a strip-shaped current collecting portion 8c bifurcated from the connection plate 8a and extending downward. The current collecting portion 8c of the positive electrode lead 8 sandwiches the positive electrode current-collecting tab 5a of the electrode group 2 therebetween, and is electrically connected to the positive electrode current-collecting tab 5a by welding. Whereas, a negative electrode lead 10 includes a connection plate 10a for electrically connecting with a negative electrode terminal 11, a through hole 10b opened in the connection plate 10a, and a strip-shaped current collecting portion 10c bifurcated from the connection plate 10a and extending downward. The current collecting portion 10c of the negative electrode lead 10 sandwiches the negative electrode current-collecting tab 6a of the electrode group 2 therebetween, and is electrically connected to the negative electrode current-collecting tab 6a by welding. The method for electrically connecting the positive and negative electrode leads 8 and 10 to the positive and negative electrode current-collecting tabs 5a and 6a is not particularly limited, and examples thereof include welding such as ultrasonic welding or laser welding.

The electrode guard 12 includes a side plate 12a covering end surfaces of the positive and negative electrode current-collecting tabs 5a and 6a, and a side plate 12b curved in a U shape so as to cover the outermost peripheries of the positive and negative electrode current-collecting tabs 5a and 6a. The upper end of the electrode guard 12 is opened to house the electrode group 2 therefrom. The positive electrode current-collecting tab 5a of the electrode group 2 is covered with the electrode guard 12 in a state in which the current collecting portion 8c of the positive electrode lead 8 is welded. The connection plate 8a of the positive electrode lead 8 is located above the electrode guard 12. Whereas, the negative electrode current-collecting tab 6a of the electrode group 2 is covered with the electrode guard 12 in a state in which the current collecting portion 10c of the negative electrode lead 10 is welded. The connection plate 10a of the negative electrode lead 10 is located above the electrode guard 12. The two electrode guards 12 are fixed to the electrode group 2 by an insulating tape 13.

As illustrated in FIGS. 1 and 2, the sealing plate 4 has a rectangular plate shape. The sealing plate 4 has through holes 4a and 4b for attaching the positive and negative electrode terminals 9 and 11. In addition, the sealing plate 4 has an inlet 20. The through holes provided on the sealing plate 4 may just be the three of the through holes 4a and 4b and the inlet 20. In this case, the inlet 20 also serves as a gas vent hole, and therefore, a separate gas vent hole need not be provided. Therefore, there is an advantage that the number of processes for fabricating the sealing plate 4 can be reduced. The inlet 20 may be provided on a wall surface of the prismatic container 3.

The inlet 20 is also used for releasing gas generated inside the battery after an electrolytic solution is added therethrough. The inlet 20 is sealed by a sealing lid 14. Herein, the sealing lid 14 has a disc shape. The sealing lid 14 is fixed to the surface of the sealing plate 4 by, for example, welding. The sealing lid 14 is formed of, for example, a metal such as aluminum or an aluminum alloy. In addition, the shape of the sealing lid 14 is not limited to a disc shape, and can be appropriately changed according to the shape of the liquid injection port.

As illustrated in FIG. 2, an insulating plate 16 is disposed on the back surface of the sealing plate 4. The insulating plate 16 includes at one end, a recess 16a in which the connection plate 8a of the positive electrode lead 8 is housed, and at the other end, a recess 16b in which the connection plate 10a of the negative electrode lead 10 is housed. A space between the recess 16a and the recess 16b is opened, where the back surface of the sealing plate 4 is exposed. In addition, each of the recess 16a and recess 16b of the insulating plate 16 includes a through hole communicating with the through holes 4a and 4 b of the sealing plate 4.

Each of the positive and negative electrode terminals 9 and 11 includes rectangular plate-shaped head portions 9a and 11a and shaft portions 9b and 11b extending from the head portions 9a and 11a. An insulating gasket 17 includes a through hole 17a into which the shaft portions 9b and 11b of the positive and negative electrode terminals 9 and 11 are inserted. The shaft portion 9b of the positive electrode terminal 9 is inserted into the through hole 17a of the insulating gasket 17, the through hole 4a of the sealing plate 4, the through hole of the insulating plate 16, and the through hole 8b of the connection plate 8a of the positive electrode lead 8, and is caulked and fixed to these members. Accordingly, the positive electrode terminal 9 is electrically connected to the positive electrode current-collecting tab 5a via the positive electrode lead 8. Whereas, the shaft portion 11b of the negative electrode terminal 11 is inserted into the through hole 17a of the insulating gasket 17, the through hole 4b of the sealing plate 4, the through hole of the insulating plate 16, and the through hole 10b of the connection plate 10a of the negative electrode lead 10, and is caulked and fixed to these members. Accordingly, the negative electrode terminal 11 is electrically connected to the negative electrode current-collecting tab 6a via the negative electrode lead 10.

As illustrated in FIG. 5, a principal surface 21 of the electrode group 2 housed in the container member 1 lies along the pair of the principal walls 30 of the prismatic container 3. Each within the pair of the principal walls 30 of the prismatic container 3 respectively includes a first principal wall surface 31 and a second principal wall surface 32 facing outside the prismatic container 3. The principal surface 21 of the electrode group 2 herein refers to a surface intersecting with the thickness direction of the flattened shape and extending along the winding axis direction of the wound structure. The principal surface 21 of the electrode group 2 may be flat on both the front side and the reverse side. The principal surfaces 21 on either side need not be flat, and may be, for example, raised or recessed. In FIG. 5, the cross-sectional shape of the electrode group 2 is exaggerated so that it is visually apparent that the electrode group 2 is not flat.

The principal surfaces 21 respectively on front and reverse sides of the flattened shape of the electrode group 2 are pressed against the inner surface of the principal wall of the prismatic container 3. In the illustrated example, each principal wall 30 of the prismatic container 3 is pressed by the electrode group 2 from the inside, and is deformed into a shape bulging toward a first direction 310 toward the outside at the side of the first principal wall surface 31, which is the outer surface of one of the principal walls 30, and a second direction 320 toward the outside at the side of the second principal wall surface 32, which is the outer surface of the other of the principal walls 30 on the reverse side of the prismatic container 3 with respect to the first principal wall surface 31. In FIG. 5, the deformation is exaggerated so that the deformation of the principal wall 30 of the prismatic container 3 would be visually apparent. The deformation of the principal walls 30 of the prismatic container 3 is not limited to the deformation in which each principal wall 30 protrude toward the outside of the prismatic container 3 on both the first principal wall surface 31 and the second principal wall surface 32 sides as illustrated in the drawing. For example, each of the principal walls 30 may be deformed to be recessed toward the inside of the prismatic container 3 on both the first principal wall surface 31 and the second principal wall surface 32 sides. Alternatively, the principal wall 30 on one side may protrude outward while the principal wall 30 on the opposite side is recessed inward. In addition, each of the principal walls 30 may deform into a partially protruded and partially recessed shape.

It is desirable that the degree of deformation of each principal wall 30 is such that the undulation at the center of each surface is kept within a range of -0.6 mm or more and 0.2 mm or less on both the first principal wall surface 31 and the second principal wall surface 32. Specifically, it is desirable that a first distance between a first center of the first principal wall surface 31 and a first reference surface of the first principal wall surface 31 is within a range of -0.6 mm or more and 0.2 mm or less, and at the same time a second distance between a second center of the second principal wall surface 32 and a second reference surface of the second principal wall surface 32 is within a range of -0.6 mm or more and 0.2 mm or less. The first distance herein is the shortest distance between the first center and the first reference surface, that is, a distance along a direction orthogonal to the first reference surface. Similarly, the shortest distance between the second center and the second reference surface, that is, the second distance is a distance along a direction orthogonal to the second reference surface. When the first distance is a positive value, the first principal wall surface 31 protrudes from the first reference surface outside the prismatic container 3. When the first distance is a negative value, the first principal wall surface is recessed from the first reference surface to the inside of the prismatic container 3. Similarly, when the second distance is a positive value, the second principal wall surface 32 protrudes outward, and when the second distance is a negative value, the second principal wall surface is recessed inward. Details of the first reference surface and the second reference surface will be described later, and each reference surface corresponds to a virtual surface defined by the inner periphery of a frame portion located on the outer periphery of the corresponding principal wall surface.

The first distance may be within a range of -0.6 mm or more and less than 0 mm. Alternatively, the first distance may be within a range of more than 0 mm and 0.2 mm or less. The second distance may be within a range of -0.6 mm or more and less than 0 mm. Alternatively, the second distance may be within a range of more than 0 mm and 0.2 mm or less. Both the first distance and the second distance are preferably within a range of -0.6 mm or more and less than 0 mm. That is, the principal walls 30 on both sides of the prismatic container 3 are preferably recessed. When the first distance and the second distance are less than 0 mm, the principal walls improve close arrangement of the electrodes sandwiching the separator in the electrode group inside the battery. In a battery having the distance of more than 0 mm, the electrode group is in contact with the principal wall surface, and the electrodes are well arranged closely with respect to each other with the separator interposed therebetween. Excessive protrusion is not preferable for being a factor that causes the electrode distance within the electrode group inside the battery to increase.

When the container member is restrained from the outside, the first distance and the second distance can be controlled by adjusting the degree of pressurization by the restraining member. For example, when the restraint is strengthened, the values of the first distance and the second distance tend to decrease to be a negative value. In addition, for example, the restraint on one of the first principal wall surface 31 side and the second principal wall surface 32 side may be strengthened and the restraint on the other side weakened, whereby it is possible to set one of the first distance and the second distance to a positive value and set the other to a negative value, that is, it is possible to have the principal wall 30 on one side be protruded and the principal wall 30 on the other side be recessed.

The thickness T_{PC} of the prismatic container housing the electrode group reflects the deformation of the principal walls 30 described above. As illustrated in FIG. 5, the thickness T_{PC} of the prismatic container is a thickness in a direction intersecting with the principal walls 30. That is, the thickness T_{PC} can be said to be a thickness along the first direction 310 and the second direction 320.

FIG. 6 illustrates a state in which the electrode group 2 is taken out from the container member 1. For simplification of the drawing, the principal walls 30 of the prismatic container 3 are shown flat in the illustrated example; however, the shape of the prismatic container 3 after taking out the electrode group 2 is not limited to this example. The wall thickness T1 of the prismatic container 3 may correspond to at least the thickness of the principal wall 30, as shown in FIG. 6. The thickness T_{EG} of the electrode group 2 in a state of being outside the prismatic container 3 is equal to the distance between the centers of the principal surfaces 21 on both the front and reverse sides of the electrode group 2.

The above example has described the secondary battery 100 that includes the electrode group 2 having the wound structure in which the positive electrode current-collecting tab 5a and the negative electrode current-collecting tab 6a protrude from each of the end surfaces on both sides in the winding axis direction, and has a lateral winding form in which each of the end surfaces where the positive electrode current-collecting tab 5a or the negative electrode current-collecting tab 6a is located faces not the sealing plate 4 but the second side walls 33 along the short side direction connecting each principal wall 30 of the prismatic container 3; however, the aspect of the secondary battery is not limited to the illustrated example. For example, the positive electrode current-collecting tab 5a and the negative electrode current-collecting tab 6a may be positioned at the same end surface in the electrode group 2. In addition, the secondary battery may be a secondary battery in a vertical winding form in which the winding axis direction intersects with the sealing plate 4, and the end surface from which the positive electrode current-collecting tab 5a and/or the negative electrode current-collecting tab 6a protrudes faces the sealing plate 4.

Hereinafter, the negative electrode, the positive electrode, the electrolyte, the separator, the container member, the negative electrode terminal, and the positive electrode terminal will be described in detail.

### 1) Negative Electrode

The negative electrode may include a negative electrode current collector and a negative electrode active material-containing layer provided on the negative electrode current collector. The negative electrode active material-containing layer may be formed on one surface or both of reverse surfaces of the negative electrode current collector. The negative electrode active material-containing layer contains a negative electrode active material, and optionally an electro-conductive agent and a binder.

The negative electrode active material-containing layer includes a titanium-containing oxide as negative electrode active material. The titanium-containing oxide contained in the negative electrode active material-containing layer may include a titanium-niobium composite oxide. The titanium-niobium composite oxide may include, for example, a titanium-niobium composite oxide having a monoclinic crystal structure or a titanium-niobium composite oxide having an orthorhombic crystal structure.

Examples of the monoclinic titanium-niobium composite oxide include a compound represented by general formula LiₐTi₁₋ₓM1ₓNb_{2-y}M2_{y}O_{7-δ}. In the general formula LiₐTi₁₋ₓM1ₓNb_{2-y}M2_{y}O_{7-δ}, subscript a is within a range of 0 ≤ a < 5, subscript x is within a range of 0 ≤ x < 1, subscript y is within a range of 0 ≤ y < 1, and subscript δ is within a range of -0.3 ≤ δ ≤ 0.3. Element M1 and element M2 are each at least one selected from the group consisting of Mg, Fe, Ni, Co, W, Ta, and Mo. The element M1 and element M2 are the same or different element from each other. The above LiₐTi₁₋ₓM1ₓNb_{2-y}M2_{y}O_{7-δ} is preferably included as the titanium niobium composite oxide. Specific examples include LiₐNb₂TiO₇ (0 ≤ a ≤ 5).

The titanium-niobium composite oxide may include a titanium-niobium composite oxide having an orthorhombic crystal structure. Examples of titanium-niobium composite oxide of the orthorhombic structure includes a compound represented by Li₂₊ₛNa₂₋ₜM3ᵤTi_{6-v-w}NbᵥM4_{w}O_{14+σ}. In general formula Li₂₊ₛNa₂₋ₜM3ᵤTi_{6-v-w}NbᵥM4_{w}O_{14+σ}, subscript s is within a range of 0 ≤ s ≤ 4, subscript t is within a range of 0 < t < 2, subscript u is within a range of 0 ≤ u < 2, subscript v is within a range of 0 < v < 6, subscript w is within a range of 0 ≤ w < 3, a sum of the subscript v and the subscript w is within a range of 0 < v + w < 6, subscript σ is within a range of -0.5 ≤ σ ≤ 0.5. Element M3 is at least one selected from the group consisting of Cs, K, Sr, Ba and Ca. Element M4 is at least one selected from the group consisting of Zr, Sn, V, Ta, Mo, W, Fe, Mn and Al.

The negative electrode active material-containing layer may contain, for example, a single species of titanium-niobium composite oxide. Alternatively, the negative electrode active material-containing layer may contain two or more species of titanium-niobium composite oxides. For example, both a monoclinic titanium-niobium composite oxide and an orthorhombic titanium-niobium composite oxide may be contained in the negative electrode active material-containing layer. In addition to a single species of titanium-niobium composite oxide or two species or more of titanium-niobium composite oxides, the negative electrode active material-containing layer may contain another species of titanium-containing oxide or two species or more of other titanium-containing oxides. Examples of other titanium-containing oxides include lithium titanium oxide having a spinel structure (for example, lithium titanate represented by Li_{4+z}Ti₅O₁₂ where 0 ≤ z ≤ 3), monoclinic titanium dioxide (TiO₂), anatase titanium dioxide, rutile titanium dioxide, hollandite titanium composite oxide and lithium titanium oxide having a ramsdellite structure. A content of titanium-niobium composite oxide (s) with respect to the total mass of negative electrode active material in the negative electrode active material-containing layer is desirably from 50 mass% to 100 mass%.

In addition to the above titanium-containing oxides, a niobium oxide such as niobium pentoxide may be included as a negative electrode active material.

The electro-conductive agent is blended in order to enhance the current collecting performance and to suppress contact resistance between the negative electrode active material and the negative electrode current collector. Examples of the electro-conductive agent include carbonaceous substances such as vapor grown carbon fiber (VGCF), carbon blacks such as acetylene black, graphite, carbon nanofibers, and carbon nanotubes. One of these may be used as the electro-conductive agent, or two or more may be used in combination as the electro-conductive agent. Alternatively, instead of using the electro-conductive agent, a carbon coating or an electro-conductive inorganic material coating may be applied to the surface of the active material particle.

The binder is added to fill gaps among the dispersed negative electrode active material and also to bind the negative electrode active material with the negative electrode current collector. Examples of the binder include polytetrafluoroethylene (PTFE), polyvinylidene fluoride (PVdF), fluororubber, styrene-butadiene rubber, acrylic resin, copolymers of acrylic resin, polyacrylate compounds, imide compounds, carboxymethyl cellulose (CMC), and salts of CMC. One of these may be used as the binder, or alternatively, two or more may be used in combination as the binder.

In the negative electrode active material-containing layer, the negative electrode active material, electro-conductive agent, and binder are preferably blended in proportions of 70% by mass to 96% by mass, 2% by mass to 28% by mass, and 2% by mass to 28% by mass, respectively. When the amount of electro-conductive agent is 2% by mass or more, the current collection performance of the negative electrode active material-containing layer can be improved. Thereby, output performance at large current can be expected to be good. When the amount of binder is 2% by mass or more, binding between the negative electrode active material-containing layer and negative electrode current collector is sufficient, and excellent cycling performances can be expected. On the other hand, an amount of each of the electro-conductive agent and binder is preferably 28% by mass, in view of increasing the capacity.

There may be used for the negative electrode current collector, a material which is electrochemically stable at the potential at which lithium (Li) is inserted into and extracted out from the negative electrode active material. The negative electrode current collector preferably includes aluminum. Specifically, the negative electrode current collector is preferably made of aluminum or an aluminum alloy including one or more selected from the group consisting of Mg, Ti, Zn, Mn, Fe, Cu, and Si. The thickness of the negative electrode current collector is preferably from 5 µm to 20 µm. The negative electrode current collector having such a thickness can maintain balance between the strength and weight reduction of the negative electrode.

The negative electrode current collector may include a portion, where the negative electrode active material-containing layer is not formed on a surface thereof. This portion may serve as a negative electrode current collecting tab.

Specific examples thereof may include a negative electrode in which an aluminum-containing foil is used for the negative electrode current collector and a titanium-niobium composite oxide is used for the negative electrode active material. Such a negative electrode has high strength, and operates in a potential range in which the problem of formation of lithium dendrites does not arise. Therefore, the wound electrode group using the negative electrode can be tightly wound without concern of a short circuit, and therefore the negative electrode is not become crimpled or damaged even when the electrode group is pressed by the container member. Therefore, there can be adopted the configuration in which the electrode group is pressed against the container member as described, thus allowing achieving both the high energy density and the good charge-discharge performance.

In contrast, for example, when using a negative electrode including a copper foil as the negative electrode current collector and containing graphite or Si as the negative electrode active material, there is a concern of a minute short circuit, and thus it is difficult to design the electrode group to be pressed against the inner wall of the container member. In addition, when a graphite-based negative electrode is used, winding of the electrode group tends to be made loose in order to avoid crushing of the graphite active material, and thus it is difficult to strongly press the electrode group due to concern of short circuit, and crimpling easily occurs.

The density of the negative electrode active material-containing layer (excluding the current collector) is preferably from 1.8 g/cm³ to 2.8 g/cm³. The negative electrode, in which the density of the negative electrode active material-containing layer is within this range, is excellent in energy density and ability to hold the electrolyte. The density of the negative electrode active material-containing layer is more preferably from 2.1 g/cm³ to 2.6 g/cm³.

The negative electrode may be fabricated by the following method, for example. First, negative electrode active material, electro-conductive agent, and binder are suspended in a solvent to prepare a slurry. The slurry is applied onto one surface or both of reverse surfaces of a current collector. Next, the applied slurry is dried to form a composite having the current collector and negative electrode active material-containing layer (s) stacked. Then, the composite is subjected to pressing. The negative electrode can be prepared in this manner.

Alternatively, the negative electrode may also be fabricated by the following method. First, negative active material, electro-conductive agent, and binder are mixed to obtain a mixture . Next, the mixture is formed into pellets . Then the negative electrode can be obtained by arranging the pellets on the current collector.

### 2) Positive Electrode

The positive electrode may include a positive electrode current collector and a positive electrode active material-containing layer disposed on the positive electrode current collector. The positive electrode active material-containing layer may be formed on one surface or both of reverse surfaces of the positive electrode current collector. The positive electrode active material-containing layer may contain a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxides (MnO₂), iron oxides, copper oxides, nickel oxides, lithium manganese composite oxides (e.g., LiₚMn₂O₄ or LiₚMnO₂; 0 < p ≤ 1), lithium nickel composite oxides (e.g., LiₚNiO₂; 0 < p ≤ 1), lithium cobalt composite oxides (e.g., LiₚCoO₂; 0 < p ≤ 1), lithium nickel cobalt composite oxides (e.g., LiₚNi_{1-q}Co_{q}O₂; 0 < p ≤ 1, 0 < q < 1), lithium manganese cobalt composite oxides (e.g., LiₚMn_{q}Co_{1-q}O₂; 0 < p ≤ 1, 0 < q < 1), lithium nickel manganese composite oxides having a spinel structure (e.g., LiₚNiₕMn₂₋ₕO₄; 0 < p ≤ 1, 0 < h < 2), lithium phosphates having an olivine structure (e.g., LiₚFePO₄; 0 < p ≤ 1, LiₚMnPO₄; 0 < p ≤ 1, LiₚMn₁₋ₜFeₜPO₄; 0 < p ≤ 1, 0 < t ≤ 1, LiₚCoPO₄; 0 < p ≤ 1), iron sulfates (Fe₂(SO₄)₃), vanadium oxides (e.g., V₂O₅), and lithium nickel cobalt manganese composite oxide (e.g., LiₚNi_{1-q-r}Co_{q}MnᵣO₂; 0 < p ≤ 1, 0 < q < 1, 0 < r < 1, q + r < 1).

Among the above, examples of compounds more preferable as the positive electrode active material include lithium manganese composite oxides having a spinel structure (e.g., LiₚMn₂O₄; 0 < p ≤ 1), lithium nickel composite oxides (e.g., LiₚNiO₂; 0 < p ≤ 1), lithium cobalt composite oxides (e.g., LiₚCoO₂; 0 < p ≤ 1), lithium nickel cobalt composite oxides (e.g., LiₚNi_{1-q}Co_{q}O₂; 0 < p ≤ 1, 0 < q < 1), lithium nickel manganese composite oxides having a spinel structure (e.g., LiₚNiₕMn₂₋ₕO₄; 0 < p ≤ 1, 0 < h < 2), lithium manganese cobalt composite oxides (e.g., LiₚMn_{q}Co_{1-q}O₂; 0 < p ≤ 1, 0 < q < 1), lithium iron phosphates (e.g., LiₚFePO₄; 0 < p ≤ 1), lithium nickel cobalt manganese composite oxides (e.g., LiₚNi_{1-q-r}Co_{q}MnᵣO₂; 0 < p ≤ 1, 0 < q < 1, 0 < r < 1, q + r < 1), and lithium phosphates having an olivine structure (e.g., LiₚFePO₄; 0 < p ≤ 1, LiₚMnPO₄; 0 < p ≤ 1, LiₚMn₁₋ₜFeₜPO₄; 0 < p ≤ 1, 0 < t ≤ 1, LiₚCoPO₄; 0 < p ≤ 1). The positive electrode potential can be made high by using these positive electrode active materials. Specific examples thereof may include a positive electrode active material including at least one selected from the group consisting of the above lithium nickel cobalt manganese composite oxide, lithium phosphate, and lithium nickel manganese composite oxide.

When an ambient temperature molten salt is used as the electrolyte of the battery, it is preferable to use a positive electrode active material including lithium iron phosphate, Li_{b}VPO₄F (0 ≤ b ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 µm. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. The positive electrode active material having a specific surface area of 0.1 m²/g or more can secure sufficient sites for inserting and extracting Li ions. The positive electrode active material having a specific surface area of 10 m²/g or less is easy to handle during industrial production, and can secure a good charge-discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, styrene-butadiene rubber (SBR), polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon blacks such as acetylene black, graphite, graphene, carbon nanofibers, and carbon nanotubes. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector preferably includes aluminum. Specific examples of preferable positive electrode current collectors include an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface of thereof. This portion may serve as a positive electrode current collecting tab.

The positive electrode may be fabricated by the following method, for example. First, positive electrode active material, electro-conductive agent, and binder are suspended in a solvent to prepare a slurry. The slurry is applied onto one surface or both of reverse surfaces of a current collector. Next, the applied slurry is dried to form a composite having the current collector and active material-containing layer(s) (positive electrode active material-containing layer(s)) stacked. Then, the composite is subjected to pressing. The positive electrode can be prepared in this manner.

Alternatively, the positive electrode may also be fabricated by the following method. First, positive active material, electro-conductive agent, and binder are mixed to obtain a mixture . Next, the mixture is formed into pellets . Then the positive electrode can be obtained by arranging the pellets on the current collector.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); γ-butyrolactone (GBL), acetonitrile (AN), and sulfolane (SL) . These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C) . The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

### 4) Separator

The separator may be made of, for example, a porous film or synthetic resin nonwoven fabric including polyethylene (PE), polypropylene (PP), polyethylene terephthalate (PET), cellulose, or polyvinylidene fluoride (PVdF) . In view of safety, a porous film made of polyethylene or polypropylene is preferred. This is because such a porous film melts at a fixed temperature and thus able to shut off current.

### 5) Container Member

The container member includes a prismatic container. As the container member, for example, a metal container may be used, including prismatic containers made of metal. The container member may include a lid for the opening of the prismatic container, for example, a sealing plate made of metal.

The wall thickness of the prismatic container, i.e. the wall thickness T1, is 1 mm or less, for example, and more preferably 0.5 mm or less, and still more preferably 0.2 mm or less. The preferable lower limit of the wall thickness T1 is 0.1 mm. That is, the wall thickness T1 is preferably within the range of 0.1 mm to 1 mm.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less. In a battery including such a metal container, drastic improvements in long-term reliability and heat releasing properties become possible. Specific example thereof may include container members including a prismatic container made of a metal can fabricated with aluminum and a prismatic container made of a metal can fabricated with aluminum alloy.

### 6) Negative electrode Terminal

The negative electrode terminal may be made of a material that is electrochemically stable at the Li insertion/extraction potential of the aforementioned negative electrode active material, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce contact resistance between the negative electrode terminal and the negative electrode current collector.

### 7) Positive Electrode Terminal

The positive electrode terminal may be made of a material that is electrically stable in the potential range of 3 V to 4.5V (vs. Li/Li⁺) relative to the redox potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

### <Production method>

The secondary battery according to the first approach can be produced, for example, as follows. Herein, an example of producing a secondary battery using a liquid electrolyte as the electrolyte will be described.

A negative electrode, a positive electrode, and a separator are prepared. The negative electrode and the positive electrode can be produced by the method described above.

The prepared negative electrode, separator, and positive electrode are stacked in the order of the negative electrode, separator, positive electrode, and separator to provide a stack. Then, this stack is spirally wound to provide a wound body. At this time, care is taken so as to not have the negative electrode, the positive electrode, and the separator meander, which would make the stacking positions shift, whereby the positive electrode and the negative electrode may come into contact with each other. The obtained wound body is subjected to a press treatment to provide a flat wound electrode group.

After the press treatment is performed, before the electrode group is inserted into the prismatic container, the leads connected to the positive and negative electrode terminals provided on the lid of the container member and the current collectors of the positive and negative electrodes are welded to each other. For example, a corresponding lead is welded to the current-collecting tab. The electrode group to which the lead is welded is inserted into the prismatic container, and then the lid on which the electrode terminal is provided is welded to the prismatic container. At this time, in order to keep the electrode group form being damaged, the electrode group is preferably inserted into the prismatic container together with a member for protecting the electrode group, for example, an electrode guard.

An inlet for introducing a liquid electrolyte is provided on either the prismatic container or the lid. The electrolyte is prepared and introduced from the inlet. The container member is preferably dried before introducing the electrolyte. It is more preferable to perform vacuum drying. After the electrolyte is introduced, the inlet is sealed by closing the inlet with a sealing lid and then welding. At this time, the inlet is examined to make sure that no electrolyte has attached thereto.

The prismatic battery assembled as described above is restrained by using a restraining apparatus such as a resin or a metal plate, then charge and discharge are performed. At this time, at least the central portion of the principal walls of the prismatic container are pressed from both front and back sides.

Immersion of the liquid electrolyte may cause swelling and expansion of the electrode group. In addition, charge carrier ions are inserted into and extracted from the negative electrode active material in accompany of the charge and discharge, whereby the active material expands and contracts, and as a result, the electrode group may expand. For example, when a negative electrode including a titanium-niobium composite oxide is used as a negative electrode active material, the titanium-niobium composite oxide expands upon charge. The titanium-niobium composite oxide itself contracts upon discharge; however, the entire negative electrode remains expanded in a state in which open distance is left between the active material particles. By restraining from outside the prismatic container upon expansion of the electrode group due to charge and discharge as described above, the state in which the electrode group is pressed against the inner surface of the prismatic container can be achieved.

By appropriately adjusting the relationship between the dimensions of the electrode group and the inner dimensions of the prismatic container when inserting the electrode group into the prismatic container, or by adjusting the charge-discharge conditions, the degree of expansion of the electrode group can be controlled and in turn, the thickness T_{EG} after taking out the electrode group can be controlled. When the thickness of the electrode group during insertion is closer to the distance between the inner surfaces of the principal walls of the prismatic container, the expanded electrode group tends to be in closer contact with the inner surfaces of the prismatic container. However, from the viewpoint of avoiding scratching and damaging the surface by the edge of the prismatic container when inserting the electrode group, it is preferable to secure a certain clearance. In addition, increasing the charge voltage to thereby further lower the negative electrode potential increases the expansion rate of the negative electrode active material, and the electrode group can be further expanded. The lithium titanium oxide having a spinel structure is known to not expand and contract upon charge and discharge; however, a compound that greatly expands and contracts with charge and discharge, like the above titanium-niobium composite oxide, is preferably used as the negative electrode active material.

### <Measurement method>

Hereinafter, various measurement methods related to the secondary battery will be described. Specifically, a method of measuring dimensions of a prismatic container and an electrode group of a secondary battery, and a method of measuring an electrode active material will be described. The dimensions of the prismatic container include the thickness T_{PC} of the prismatic container housing the electrode group, the first distance for the first principal wall surface, the second distance for the second principal wall surface, and the wall thickness T1 of the prismatic container. The dimension of the electrode group includes the thickness T_{EG} of the electrode group in a state of being outside the prismatic container.

### (Method of measuring thickness T_{PC} of prismatic container)

The thickness T_{PC} of the prismatic container in a state having the electrode group housed is measured as follows. The secondary battery is brought into a discharged state. The discharged state herein indicates a state arrived when constant current discharge is performed to a discharge lower limit voltage at a current value of 0.2 C or less under an environment of 25°C.

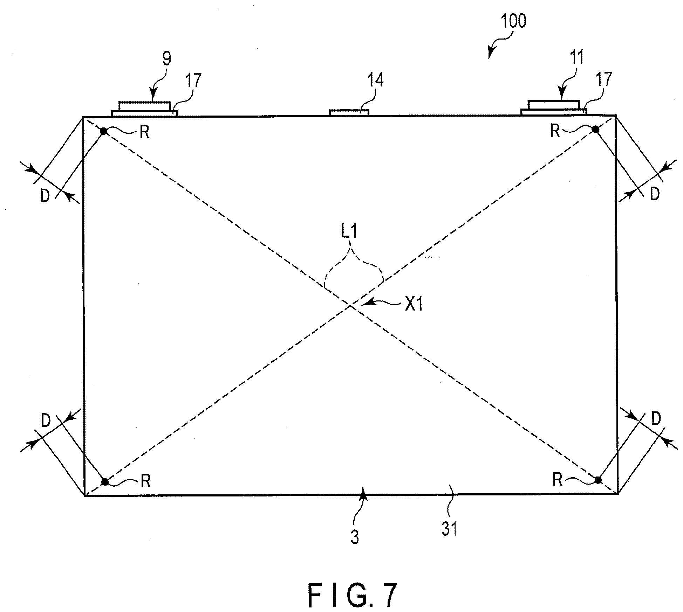

The thickness of the center of the battery in the discharged state is measured with a micrometer. The center of the battery herein refers to an intersection of diagonal lines on the principal surface of the prismatic container. A specific description will be given with reference to a plan view of the secondary battery shown in FIG. 7. FIG. 7 is a plan view of the secondary battery 100 on the first principal wall surface 31 side of the prismatic container 3. An intersection X1 of the two diagonal lines L1 is regarded as the center of the first principal wall surface 31. Although not illustrated, an intersection of diagonal lines on the reverse side of the secondary battery 100 is regarded as the center of the second principal wall surface. The thickness T_{PC} in the direction intersecting the principal wall of the prismatic container 3 is measured at the center position of both principal wall surfaces. The thickness T_{PC} of the prismatic container 3 can be rephrased as a distance between the center of the first principal wall surface 31 and the center of the second principal wall surface. The thickness measurement is performed in a state in which the electrode group is housed within the prismatic container 3.

### (Method of measuring first and second distances on first and second principal wall surfaces)

For the pair of principal walls included in the prismatic container, the first distance from the first reference surface of the first principal wall surface to the first center and the second distance from the second reference surface of the second principal wall surface to the second center are respectively measured as follows.

The principal wall surface of the battery in the discharge state is measured by a computer numerical control (CNC) image measurement system. For example, measurement is performed with NEXIV VMR-3020 manufactured by Nikon Corporation.

A typical secondary battery 100 like that shown in FIGS. 1 and 2 with a container member 1 including a rectangular sealing plate 4 as a lid has two pairs of side walls intersecting with the sealing plate 4 and a bottom surface 34, taking the surface opposite the sealing plate 4 as the bottom surface 34. Of the two pairs of side walls, a pair having a wider surface is taken as principal walls 30, outer surfaces of the principal walls 30 are respectively taken as a first principal wall surface and a second principal wall surface, and measurement is performed.

A specific description will be given with reference to FIG. 7. In the first principal wall surface 31, four reference points R are respectively set near the four corners on diagonal lines L1. Each reference point R is set at a position away from the corner of the first principal wall surface 31 by a distance D. The distance D from the corner is set to 5 mm. A virtual surface obtained by connecting the four reference points R is defined as a first reference surface.

The degree of undulation of the first principal wall surface 31 is measured, considering a portion that is a convex toward the outside of the secondary battery 100 with respect to the first reference surface as a positive value and a portion that is a recess toward the inside of the secondary battery 100 with respect to the first reference surface as a negative value. The position of the intersection X1 of the diagonal lines L1 on the first principal wall surface 31 is regarded as the first center, and the first distance from the first center to the first reference surface is determined. The first distance is the shortest distance from the first reference surface to the first center, and is a distance in a direction orthogonal to the first reference surface.

Although an example is not specifically illustrated, in a similar manner for the second distance, four reference points R are set on the second principal wall surface near four corners on diagonal lines, and a virtual surface obtained by connecting the reference points R is defined as the second reference surface. The position of the intersection of the diagonal lines on the second principal wall surface is regarded as the second center, and the second distance from the second center to the second reference surface is determined.

The first distance and the second distance are measured in a state with the electrode group still housed in the prismatic container 3.

### (Method of measuring wall thickness T1 of prismatic container)

The wall thickness T1 of the prismatic container is measured as follows. The battery put in the discharged state as described above is placed in a glove box of an inert atmosphere, for example, a glove box filled with argon gas. Then, the battery is disassembled in the glove box, and the electrode group is taken out from the container member. Specifically, in the glove box, the prismatic container and the sealing plate are separated from each other at the welded portion, while taking care not to short-circuit the positive electrode and the negative electrode just in case. The electrode group is drawn out together with the sealing plate.

The wall thickness of the prismatic container from which the electrode group has been removed is measured using a micrometer. For the typical prismatic battery described above, the wall thickness is arbitrarily measured at 5 locations on each of a pair of principal walls having a wider surface, and the average value for 10 locations in total is determined as the wall thickness T1 of the prismatic container. The locations for measurement are desirably selected in vicinity of the center of each principal wall.

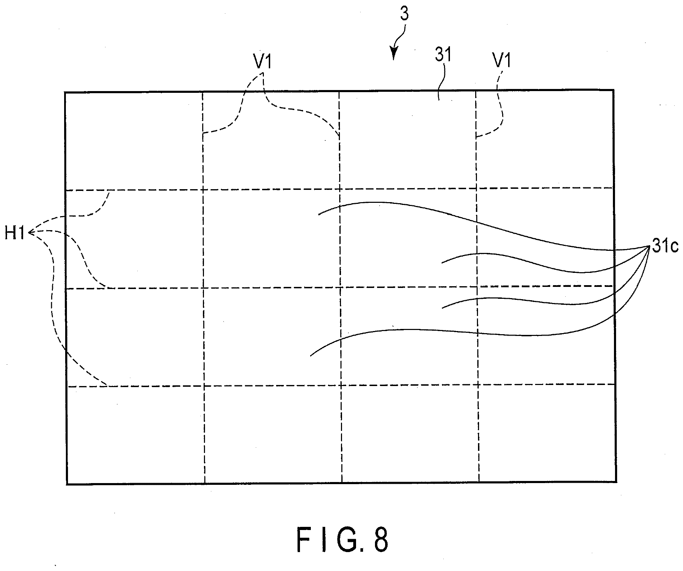

A desirable example will be specifically described with reference to a plan view of the prismatic container illustrated in FIG. 8. Regions are set by equally dividing the principal wall on the first principal wall surface 31 side of the prismatic container 3 into four in each of a vertical direction and a horizontal direction, as indicated by vertical broken lines V1 and horizontal broken lines H1. The thickness of the principal wall is measured at arbitrary 5 locations within the range of the central portion 31c corresponding to the central 4 regions among the 16 regions from the 4×4 division. Although not illustrated, in a similar manner, the other principal wall on the second principal wall surface side is divided into 4×4, and the thickness of the principal wall is measured at arbitrary 5 locations within the range of the central portion in the central 4 regions. The wall thickness T1 of the prismatic container is obtained by calculating an average value of a total of 10 points of the measurement values of the 5 points measured on the first principal wall surface 31 side and the measurement values of the 5 points measured on the second principal wall surface side.

### (Method of measuring thickness T_{EG} of electrode group)

The thickness T_{EG} of the electrode group in a state of being outside the prismatic container is measured as follows.

The surface of the electrode group taken out from the container member in the above-described manner is washed with, for example, a methyl ethyl carbonate (MEC) solvent. This washing removes the Li salt adhering to the surface of the electrode group. Thereafter, the electrode group is dried. In addition, the electrode group may be removed from the sealing plate, the electrode terminal, and the like for convenience in measurement.

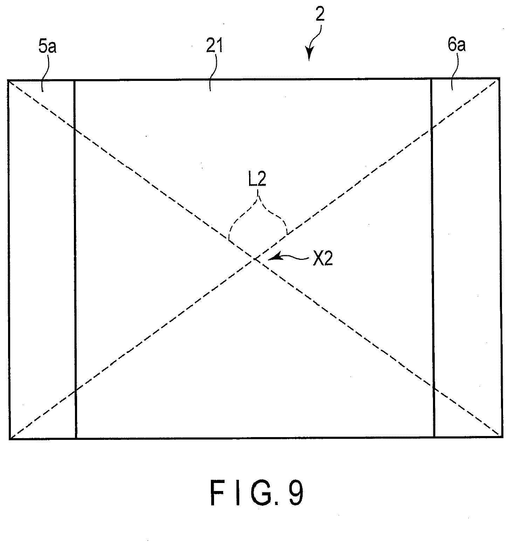

The thickness of the center of the washed electrode group is measured with a micrometer. The center of the electrode group herein refers to an intersection of diagonal lines on the principal surface of the electrode group. A specific description will be given with reference to a plan view of the electrode group illustrated in FIG. 9. An intersection X2 of two diagonal lines L2 on one principal surface 21 of an electrode group 2 is regarded as the center of the principal surface 21. Although not illustrated, an intersection of diagonal lines on the reverse side of the electrode group 2 is regarded as the center of the other principal surface. A thickness T_{EG} in a direction intersecting with the principal surface 21 of the electrode group 2 is measured at the center positions of both principal surfaces. The thickness T_{EG} of the electrode group can be rephrased as a distance between the centers of both principal surfaces.

### (Method of measuring active material)

The composition of active material(s) included in an electrode can be determined by measuring as described below.

The electrode is taken out from the electrode group, to thereby obtain a sample for measurement. For example, the electrode electrically connected to a negative electrode-side terminal may be cut out to obtain a negative electrode sample. Alternatively, the electrode electrically connected to a positive electrode-side terminal may be cut out to obtain a positive electrode sample. The taken-out electrode is washed with, for example, methyl ethyl carbonate (MEC) solvent. By the washing, Li salt adhered to the electrode surface is removed, and thereafter, the electrode is dried.

Using the obtained electrode as a sample, the composition of active material included in the electrode, for example, in the active material-containing layer, can be examined by combining elemental analysis with a scanning electron microscope equipped with an energy dispersive X-ray spectrometry scanning apparatus (scanning electron microscope-energy dispersive X-ray spectrometry; SEM-EDX), X-ray diffraction (XRD) measurement, and inductively coupled plasma (ICP) emission spectrometry. By SEM-EDX analysis, shapes of components contained in the active material-containing layer and compositions of the components contained in the active material-containing layer (each element from B to U in the periodic table) can be known. Elements within the active material-containing layer can be quantified by ICP measurement. Crystal structures of materials included in the active material-containing layer can be examined by XRD measurement.

A cross-section of the electrode taken out as described above is cut out by Ar ion milling. The cut out cross-section is observed with the SEM. Sampling is also performed in an inert atmosphere such as argon or nitrogen to avoid exposure to the air. Several particles are selected from SEM images at 3000-fold magnification. Here, particles are selected such that a particle diameter distribution of the selected particles becomes as wide as possible.

Next, elemental analysis is performed on each selected particle by EDX. Accordingly, it is possible to specify kinds and quantities of elements other than Li among the elements contained in each selected particle.

With regard to Li, information regarding the Li content in the entire active material can be obtained by ICP emission spectrometry. ICP emission spectrometry is performed according to the following procedure.

From the dried electrode, a powder sample is prepared in the following manner. The active material-containing layer is dislodged from the current collector and ground in a mortar. The ground sample is dissolved with acid to prepare a liquid sample. Here, hydrochloric acid, nitric acid, sulfuric acid, hydrogen fluoride, and the like may be used as the acid. The concentration of elements included in the active material being measured can be found by subjecting the liquid sample to ICP analysis.

Crystal structure(s) of compound(s) included in each of the particles selected by SEM can be specified by XRD measurement. XRD measurement is performed within a measurement range where 2θ is from 5 degrees to 90 degrees, using CuKα ray as a radiation source. By this measurement, X-ray diffraction patterns of compounds contained in the selected particles can be obtained.

As an apparatus for XRD measurement, SmartLab manufactured by Rigaku is used, for example. Measurement is performed under the following conditions:
X ray source: Cu target
Output: 45 kV, 200 mA
soller slit: 5 degrees in both incident light and received light
step width (2θ): 0.02 deg
scan speed: 20 deg/min
semiconductor detector: D/teX Ultra 250
sample plate holder: flat glass sample plate holder (0.5 mm thick)
measurement range: range of 5° ≤ 2θ ≤ 90°

When another apparatus is used, measurement using a standard Si powder for powder X-ray diffraction is performed to seek conditions at which measurement results of peak intensities, half-widths, and diffraction angles are equivalent to results obtained by the above apparatus, and measurement is conducted at those conditions.

Conditions of the XRD measurement is set, such that an XRD pattern applicable to Rietveld analysis is obtained. In order to collect data for Rietveld analysis, specifically, the step width is made 1/3 to 1/5 of the minimum half width of the diffraction peaks, and the measurement time or X-ray intensity is appropriately adjusted in such a manner that the intensity at the peak position of strongest reflected intensity is 5,000 cps or more.

The XRD pattern obtained as described above is analyzed by the Rietveld method. In the Rietveld method, the diffraction pattern is calculated from the crystal structure model that has been estimated in advance. Here, estimation of the crystal structure model is performed based on analysis results of EDX and ICP. The parameters of the crystal structure (lattice constant, atomic coordinate, occupancy ratio, or the like) can be precisely analyzed by fitting all the calculated values with the measured values.

Through Rietveld analysis, for example, in such a case where plural active materials are included in the negative electrode, the content of titanium-niobium composite oxide can be estimated. A fitting parameter S is used as the scale for estimating the degree of agreement between the measured intensities and the calculated intensities in the Rietveld analysis. Analysis must be made in such a manner that the S value turns out less than 1.8. When determining the occupancies in each of the sites, the standard deviation σj must also be taken into consideration. The fitting parameter S and standard deviation σj defined herein are estimated using the formula described in "Funmatsu X sen Kaisetsu no Jissai (Reality of Powder X-Ray Analysis)", 1st edition (2002), X-Ray Analysis Investigation Conversazione, The Japan Society for Analytical Chemistry, written and edited by Izumi Nakai and Fujio Izumi (Asakura Publishing Co., Ltd.).

XRD measurement can be performed with the electrode sample directly attached onto a glass holder of a wide-angle X-ray diffraction apparatus. At this time, an XRD spectrum is measured in advance in accordance with the species of metal foil of the electrode current collector, and the position (s) of appearance of the peak(s) derived from the collector is grasped. In addition, the presence/absence of peak(s) of mixed substances such as an electro-conductive agent or a binder is also grasped in advance. If the peak(s) of the current collector overlaps the peak(s) of the active material, it is desirable to perform measurement with the active material-containing layer removed from the current collector. This is in order to separate the overlapping peaks when quantitatively measuring the peak intensities. If the overlapping peaks has been grasped beforehand, the above operations can be omitted, of course.

Provided that the particles observed by the aforementioned SEM-EDX measurement contain Ti, Nb and O, and further that an X-ray diffraction pattern assigned to monoclinic is obtained from an electrode measured by the aforementioned XRD measurement, such results indicate that particles of monoclinic titanium-niobium composite oxide are present in the active material measured. When EDX measurement shows that the active material includes particles having contents of Ti and Nb that differ greatly, there is a possibility that the active material-containing layer contains plural of active materials. Amounts of elements contained in the active material in the electrode can be specified by ICP emission spectrometry according to the above procedure.

The content of the titanium-niobium composite oxide in the active material-containing layer can be estimated by the following method.

The electrode taken out from the battery according to the procedure described above is washed and dried, and then the active material-containing layer is dislodged from the current collector and ground in a mortar. The ground sample is placed in a glass sample plate and leveled so that sample surface matches the surface of the glass sample plate. In addition, a Si standard sample may be added to correct the peak position.

The powder sample charged into the glass sample plate is subjected to XRD measurement and Rietveld analysis under the conditions described above. In addition, using the powder sample, SEM-EDX measurement and ICP measurement are performed according to the above-described procedure. The contained active material species and ratio thereof can be estimated in view of the results of XRD measurement, SEM-EDX measurement, and ICP measurement.

The secondary battery according to the first approach includes an electrode group and a container member housing the electrode group. The electrode group has a flat wound structure where a stack that includes a positive electrode and a negative electrode including a titanium-containing oxide is wound. The container member includes a prismatic container that houses the electrode group. The prismatic container has a pair of principal walls arranged along principal surfaces of the electrode group. Regarding a thickness of the prismatic container in a state of having the electrode group housed as T_{PC} while regarding the wall thickness of the prismatic container as T1, the thickness T_{EG} of the electrode group alone outside the prismatic container is within a range of greater than 1 × (T_{PC} - T1 × 2) and 1.05 × (T_{PC} - T1 × 2) or less. According to the above configuration, a secondary battery and battery pack exhibiting favorable life performance and high energy density can be provided.

### [Second Approach]

According to a second approach, a battery pack is provided. The battery pack includes the secondary battery according to the first approach. The battery pack may include one secondary battery according to the first approach, or may include plural of the secondary battery according to the first approach. The plural secondary batteries may configure a battery module.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack will be described with reference to the drawings.

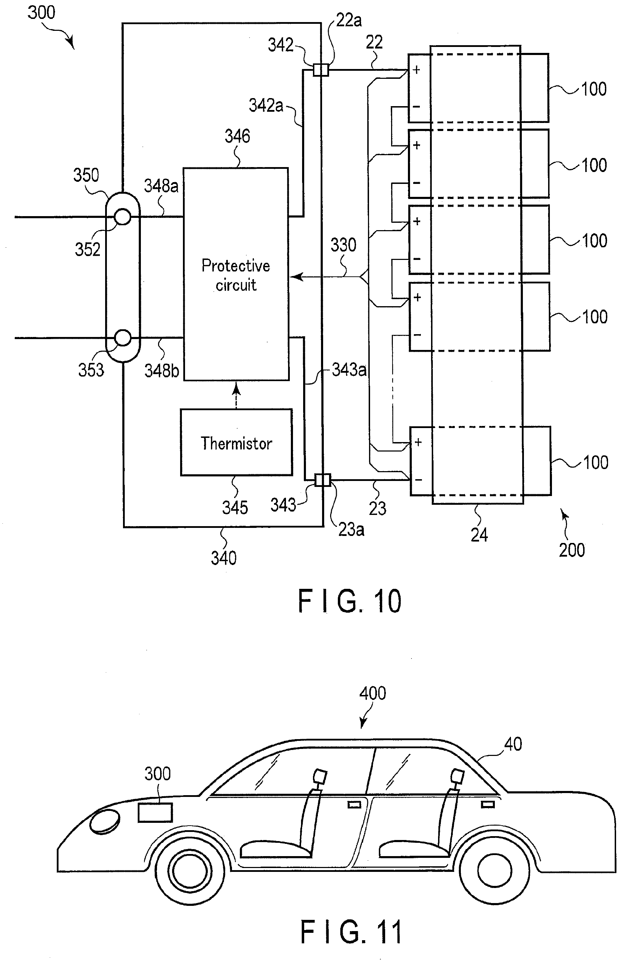

FIG. 10 is a block diagram showing an example of an electric circuit of the battery pack according to the approach.

A battery pack 300 shown in FIG. 10 includes a battery module 200, a printed wiring board 340, and wires 300. Although not illustrated, the battery pack 300 may further include a housing container capable of housing the battery module 200, the printed wiring board 34, and the wires 35, as well as a lid. The housing container may be, for example, a square bottomed container having a rectangular bottom surface . The lid may have, for example, a rectangular shape. The lid covers the housing container to house the battery module 200 and such. The housing container and the lid may be provided with openings, connection terminals, or the like for connection to an external device or the like.

In addition, the battery pack 300 may include one or more protective sheets housed in the housing container together with the battery module 200 and such. The protective sheets may be arranged between the battery module 200 and the wall surfaces of the housing container. The protective sheets 33 are made of, for example, resin or rubber.

The battery module 200 includes plural single-batteries 100, a positive electrode-side lead 22, a negative electrode-side lead 23, and adhesive tape 24.

At least one of the plural single-batteries 100 is the secondary battery according to the first approach. The plural single-batteries 100 are electrically connected in series, as shown in FIG. 10. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

For example, a negative electrode terminal of one single-battery 100 and a positive electrode terminal 7 of the single-battery 100 positioned adjacent may be connected by a bus bar. In such a manner, plural single-batteries 100 may be connected in series with the plural bus bars. Alternatively, for example, the plural single-batteries may be electrically connected in parallel by having plural negative electrode terminals being connected to each other by bus bars while having plural positive electrode terminals being connected to each other by bus bars.

Each of the single-batteries 100 may be restricted by a restraining member. Each of the single-batteries 100 may respectively have a restraining member. Alternatively, a restraining member capable of restraining plural single-batteries 100 may be included. In addition, the housing container may include a section that serves as the restraining member.

The adhesive tape 24 fastens the plural single-batteries 100. The plural single-batteries 100 may be fixed using a heat shrinkable tape in place of the adhesive tape 24. In this case, for example, protective sheets are arranged on both side surfaces of the battery module 200, and the heat shrinkable tape is wound around the battery module 200 and protective sheets. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode (s) of one or more single-battery 100.

The printed wiring board 340 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. For example, a principal surface of the printed wiring board 340 may face one side surface of the battery module, and an insulating plate may be disposed therebetween.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed the printed wiring board 340. The thermistor 345 detects the temperature of each single-battery 100 and transmits detection signals to the protective circuit 346.

The external power distribution terminal 350 is fixed to the printed wiring board 340. The external power distribution terminal 350 is electrically connected to device (s) that exists outside the battery pack 300. The external power distribution terminal 350 includes a positive-side terminal 352 and a negative-side terminal 353.

The protective circuit 346 is fixed to the printed wiring board 340. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 330.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device (s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 340 and the wires 330 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the second approach is provided with the secondary battery according to the first approach. Accordingly, the battery pack can exhibit favorable life performance and high energy density.

### [Third Approach]

According to a third approach, a vehicle is provided. The vehicle includes the battery pack according to the second approach.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

In the vehicle, the installing position of the battery pack is not particularly limited. For example, when installing the battery pack on an automobile, the battery pack may be installed in the engine compartment of the automobile, in rear parts of the vehicle body, or under seats.

The vehicle may have plural battery packs installed. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle according to the third approach is explained below, with reference to the drawings.

FIG. 11 is a partially see-through diagram schematically showing an example of a vehicle according to the approach.

A vehicle 400, shown in FIG. 11 includes a vehicle body 40 and a battery pack 300 according to the second approach. In the example shown in FIG. 11, the vehicle 400 is a four-wheeled automobile.

This vehicle 400 may have plural battery packs 300 installed. In such a case, the batteries (e.g., single-batteries or battery module) included in the battery packs 300 may be connected in series, connected in parallel, or connected in a combination of in-series connection and in-parallel connection.

In FIG. 11, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

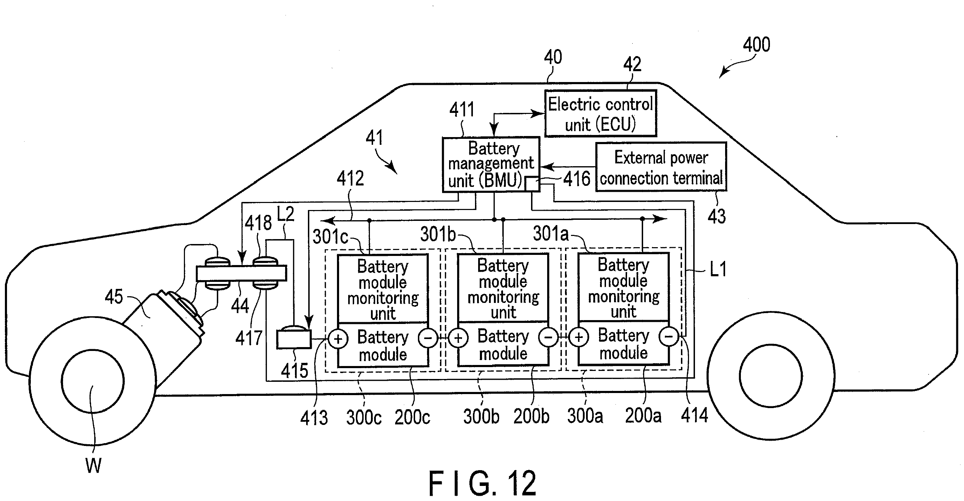

Next, with reference to FIG. 12, an aspect of operation of the vehicle according to the third approach is explained.

FIG. 12 is a diagram schematically showing an example of a control system related to an electric system in the vehicle according to the approach. A vehicle 400, shown in FIG. 12, is an electric automobile.

The vehicle 400, shown in FIG. 12, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 12, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the first approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In communication bus 412, a set of communication lines is shared at multiple nodes (i.e., the battery management unit 411 and one or more battery module monitoring units 301a to 301c) . The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 12) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (a regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the third approach is installed with the battery pack according to the second approach. Thus, the vehicle is highly reliable by virtue of including the battery pack excellent in life performance, and can exhibit high performance by virtue of including the battery pack having high energy density.

### [Examples]

Examples will be described below, and the present invention is not limited to the examples described below as long as the spirit of the present invention is not exceeded.

### (Example 1)

In Example 1, an electrode group and a nonaqueous electrolyte battery including the electrode group were produced by the following procedure.

### <Fabrication of negative electrode>

Monoclinic titanium-niobium composite oxide particles having a composition represented by the formula TiNb₂O₇ were prepared as a negative electrode active material. Acetylene black (AB) as an electro-conductive agent, and carboxymethyl cellulose (CMC) and styrene-butadiene rubber (SBR) as binders were prepared. These were mixed in pure water so that the mass ratio of the negative electrode active material : AB : CMC : SBR was 90 : 5 : 2.5 : 2.5 and a slurry was obtained. This slurry was applied onto both front and back principal surfaces of a current collector made of an aluminum foil having a thickness of 15 µm, and the resultant film was dried. Thus, there was obtained a composite including the current collector and the negative electrode active material-containing layer formed on both surfaces of the current collector. The application amount per one surface of the negative electrode active material-containing layer was 75 g/m². The width of the negative electrode was adjusted with a slitting machine, to make an application width of the negative electrode be 90 mm, and the width of the aluminum foil to which no electrode was applied be 10 mm. Then, the obtained composite was subjected to roll pressing so that the density of the negative electrode active material-containing layer was 2.55 g/cm³. Then, this composite was further subjected to vacuum drying to provide a negative electrode.

### <Fabrication of positive electrode>

Particles of a lithium-nickel-cobalt-manganese composite oxide represented by the formula: LiNi_{0.5}Co_{0.2}Mn_{0.3}O₂ were prepared as a positive electrode active material. In addition, acetylene black (AB) as an electro-conductive agent and polyvinylidene fluoride (PVdF) as a binder were prepared. These were mixed so that the mass ratio of the positive electrode active material : AB : PVdF was 90 : 5 : 5 and a mixture was obtained. Then, the obtained mixture was dispersed in an n-methylpyrrolidone (NMP) solvent to prepare a positive electrode slurry. This slurry was applied onto both front and back principal surfaces of a current collector made of an aluminum foil having a thickness of 15 µm, and the resultant film was dried. Thus, there was obtained a composite including the current collector and the positive electrode active material-containing layer formed on both surfaces of the current collector. The application amount per one surface of the positive electrode active material-containing layer was 100 g/m². The width of the positive electrode was adjusted with a slitting machine, thereby making an application width of the positive electrode be 90 mm, and the width of the aluminum foil to which no electrode was applied be 10 mm. Then, the obtained composite was subjected to roll pressing so that the density of the positive electrode active material-containing layer was 3.05 g/cm³. Then, this composite was further subjected to vacuum drying to provide a positive electrode.

### <Production of electrode group>

A polyethylene (PE) separator having a thickness of 15 µm was prepared. Then, the prepared separator, the negative electrode, and the positive electrode were stacked in the order of the negative electrode, the separator, the positive electrode, and the separator, and a stack was obtained. Then, the stack was spirally wound such that a part of the negative electrode was located outermost, thereby providing a wound body. The number of winding of the wound body was 100. Then, this wound body was pressed. The wound body was pressed at room temperature (25°C), and pressing was performed by applying a load of 80 kN for 1 minute. Thus, an electrode group was produced.

### <Preparation of nonaqueous electrolyte >

A nonaqueous electrolyte was prepared by the following procedure. Propylene carbonate (PC) and diethyl carbonate (DEC) were mixed at a volume ratio PC : DEC of 1 : 2 to provide a mixed solvent. Lithium hexafluorophosphate LiPF₆ was dissolved in the mixed solvent at a concentration of 1 M to provide a liquid nonaqueous electrolyte.

### <Assembly of battery>

An aluminum exterior can (prismatic container) having a wall thickness (T1) of 1 mm and a lid (sealing plate) thereof were prepared. Electrode terminals (positive and negative electrode terminals) and an electrode leads (positive and negative electrode leads) were assembled onto a lid of the exterior can. A member in which the lid of the exterior can, the electrode terminals, and the electrode leads were integrated was welded to the current collecting foil of the electrode group produced. The electrode group was inserted into the exterior can, a lid was welded to the exterior can, and then the assembled battery was vacuum-dried at 80°C for 10 hours. Thereafter, the electrolyte liquid was put in from the inlet. After the putting in the liquid electrolyte, the inlet was covered with a lid and welded to seal the exterior can.

### <Initial charge and discharge>

The assembled battery was charged and discharged as follows. A polytetrafluoroethylene plate (PTFE plate) having a thickness of 2 mm was placed on each of the principal surfaces on both sides of the exterior can, and an Al plate having a thickness of 7 mm was placed further outside on each surface. Charge and discharge were performed in a state in which two PTFE plates were fixed by screws so that the width therebetween was 22 mm, which was the same value as the thickness of the exterior can before the electrode group was inserted.

Charge was performed in a constant-current constant-voltage (CCCV) mode. Specifically, charge was performed to 3.0 V at a constant current of a charge rate of 0.2 C, and then charge was subsequently performed at a constant voltage of a charge voltage of 3.0 V. The charge termination condition was set to a time point when the current value reached 0.05 C. The discharge was performed in a constant current mode at a discharge rate of 0.2 C. The discharge termination voltage was set to 1.5 V.

### (Example 2)

In Example 2, a nonaqueous electrolyte battery was produced in the same manner as in Example 1, except that charge and discharge were performed in a state in which the width between two PTFE plates was 22.2 mm during initial charge and discharge.

### (Example 3)

In Example 3, a nonaqueous electrolyte battery was produced in the same manner as in Example 1, except that charge and discharge were performed in a state in which the width between two PTFE plates was 21.8 mm during initial charge and discharge.

### (Example 4)

In Example 4, a nonaqueous electrolyte battery was produced in the same manner as in Example 1, except that the arrangement of the PTFE plate and the Al plate during initial charge and discharge was changed as follows. Two PTFE plates having a thickness of 2 mm were placed on one principal surface of the exterior can, and no PTFE plate was placed on the other principal surface of the exterior can. An Al plate having a thickness of 7 mm was further provided on each surface from the outside, and charge and discharge were performed in a state in which the PTFE plate in contact with the exterior can on one principal surface and the Al plate in contact with the exterior can on the other principal surface were fixed by screws so that the width therebetween was 21.6 mm.

### (Example 5)

In Example 5, a nonaqueous electrolyte battery was produced in the same manner as in Example 4, except that charge and discharge were performed in a state in which the PTFE plate in contact with the exterior can on one principal surface and the Al plate in contact with the exterior can on the other principal surface were fixed with screws so that the width therebetween was 22 mm during initial charge and discharge.

### (Example 6)

In Example 6, a nonaqueous electrolyte battery was produced in the same manner as in Example 5, except that the number of PTFE plates on the principal surface side where the PTFE plate was in contact with the exterior can was changed to one during initial charge and discharge.

### (Example 7)

In Example 7, a nonaqueous electrolyte battery was produced in the same manner as in Example 1, except that the positive electrode active material was changed to particles of a lithium-nickel-cobalt-manganese composite oxide represented by the formula LiNi_{0.6}Co_{0.2}Mn_{0.2}O₂, and the application amount per one surface of the positive electrode active material-containing layer was changed to 98 g/m².

### (Example 8)

In Example 8, a nonaqueous electrolyte battery was produced in the same manner as in Example 1, except that the positive electrode active material was changed to particles of a lithium-nickel-cobalt-manganese composite oxide represented by the formula LiNi_{0.8}Co_{0.1}Mn_{0.1}O₂, and the application amount per one surface of the positive electrode active material-containing layer was changed to 96 g/m².

### (Example 9)

In Example 9, a nonaqueous electrolyte battery was produced in the same manner as in Example 1, except that the negative electrode active material was changed to monoclinic titanium-niobium composite oxide particles having a composition represented by the formula TiNb_{1.95}Ta_{0.05}O₇.

### (Example 10)

In Example 10, a nonaqueous electrolyte battery was produced in the same manner as in Example 1, except that the negative electrode active material was changed to monoclinic titanium-niobium composite oxide particles having a composition represented by the formula TiNb_{1.95}W_{0.05}O₇.

### (Example 11)

In Example 11, a nonaqueous electrolyte battery was produced in the same manner as in Example 1, except that the negative electrode active material was changed to monoclinic titanium-niobium composite oxide particles having a composition represented by the formula TiNb_{1.95}Mo_{0.05}O₇.

### (Example 12)

In Example 12, a nonaqueous electrolyte battery was produced in the same manner as in Example 1, except that the positive electrode active material was changed to particles of a lithium-manganese-iron composite phosphate compound represented by the formula LiMn_{0.8}Fe_{0.2}PO₄, the application amount per one surface of the positive electrode active material-containing layer was changed to 110 g/m², and the density of the positive electrode active material-containing layer was set to 2.05 g/cm³.

### (Example 13)

In Example 13, a nonaqueous electrolyte battery was produced in the same manner as in Example 1, except that the positive electrode active material was changed to particles of a lithium-nickel-manganese composite oxide represented by the formula LiNi_{0.5}Mn_{1.5}O₄, the application amount per one surface of the positive electrode active material-containing layer was changed to 130 g/m², the density of the positive electrode active material-containing layer was set to 2.6 g/cm³, and the charge voltage during initial charge was changed to 3.5 V.

### (Comparative Example 1)

In Comparative Example 1, a nonaqueous electrolyte battery was produced in the same manner as in Example 1, except that during initial charge and discharge, charge and discharge were performed without fixing the exterior can by screws at the PTFE plates and Al plates .

### (Comparative Example 2)

In Comparative Example 2, a nonaqueous electrolyte battery was produced in the same manner as in Example 1, except that the charge voltage during initial charge was changed to 3.8 V.

The designs of the nonaqueous electrolyte batteries produced in Examples 1 to 13 and Comparative Examples 1 and 2 are summarized in Table 1 to Table 3 below.

Table 1 summarizes the design of the electrode of each battery. Specifically, there are shown the composition of the electrode active material used for each of the negative electrode and the positive electrode, and the basis weight and density of the electrode active material-containing layer.

Table 2 shows details of the separator and the number of windings of the stack in the wound electrode group (the stack including a negative electrode, a positive electrode, and a separator).

Table 3 summarizes the dimensions of the battery, the container member, and the electrode group, and the amount of undulation on both sides of the battery. Specifically, the thickness T_{PC} of the prismatic container in which the electrode group is housed is shown as the dimension of the battery. As shown in Table 3, the thickness T_{PC} was equal to the distance between the PTFE plates restraining the battery (between the PTFE plate and the Al plate for the examples in which the PTFE plate is not provided and only the Al plate is provided on one side), and the battery maintained this thickness even after the restraint with the PTFE plate and the Al plate was released. As the dimension of the container member, the wall thickness T1 of the prismatic container is shown. As the dimensions of the electrode group, the thickness T_{EG} of the electrode group taken out from the container member and the notation (factor × (T_{PC} - T1 × 2)) obtained by converting the thickness T_{EG} into the relational expression relative to the thickness T_{PC} and the wall thickness T1 of the prismatic container. The amount of undulation on both surfaces of the battery indicate the first distance between the first center and the first reference surface on the first principal wall surface and the second distance between the second center and the second reference surface on the second principal wall surface as measured by the above-mentioned method. For each battery, the first principal wall surface side and the second principal wall surface side were arbitrarily selected from between the principal walls on both sides.

**[Table 1]**

| | Negative electrode active material-containing layer | | | Positive electrode active material-containing layer | | |
|---|---|---|---|---|---|---|
| | Negative electrode active material | Basis weight (g/m²) | Density (g/m³) | Positive electrode active material | Basis weight (g/m²) | Density (g/m³) |
| Example 1 | TiNb₂O₇ | 75 | 2.55 | LiNi_{0.5}Co_{0.2}Mn_{0.3}O₂ | 100 | 3.05 |
| Example 2 | TiNb₂O₇ | 75 | 2.55 | LiNi_{0.5}Co_{0.2}Mn_{0.3}O₂ | 100 | 3.05 |
| Example 3 | TiNb₂O₇ | 75 | 2.55 | LiNi_{0.5}Co_{0.2}Mn_{0.3}O₂ | 100 | 3.05 |
| Example 4 | TiNb₂O₇ | 75 | 2.55 | LiNi_{0.5}Co_{0.2}Mn_{0.3}O₂ | 100 | 3.05 |
| Example 5 | TiNb₂O₇ | 75 | 2.55 | LiNi_{0.5}Co_{0.2}Mn_{0.3}O₂ | 100 | 3.05 |
| Example 6 | TiNb₂O₇ | 75 | 2.55 | LiNi_{0.5}Co_{0.2}Mn_{0.3}O₂ | 100 | 3.05 |
| Example 7 | TiNb₂O₇ | 75 | 2.55 | LiNi_{0.6}Co_{0.2}Mn_{0.2}O₂ | 98 | 3.05 |
| Example 8 | TiNb₂O₇ | 75 | 2.55 | LiNi_{0.8}Co_{0.1}Mn_{0.1}O₂ | 96 | 3.05 |
| Example 9 | TiNb_{1.95}Ta_{0.05}O₇ | 75 | 2.55 | LiNi_{0.5}Co_{0.2}Mn_{0.3}O₂ | 100 | 3.05 |
| Example 10 | TiNb_{1.95}W_{0.05}O₇ | 75 | 2.55 | LiNi_{0.5}Co_{0.2}Mn_{0.3}O₂ | 100 | 3.05 |
| Example 11 | TiNb_{1.95}Mo_{0.05}O₇ | 75 | 2.55 | LiNi_{0.5}Co_{0.2}Mn_{0.3}O₂ | 100 | 3.05 |
| Example 12 | TiNb₂O₇ | 75 | 2.55 | LiMn_{0.8}Fe_{0.2}PO₄ | 110 | 2.05 |
| Example 13 | TiNb₂O₇ | 75 | 2.55 | LiNi_{0.5}Mn_{1.5}O₄ | 130 | 2.6 |
| Comparative Example 1 | TiNb₂O₇ | 75 | 2.55 | LiNi_{0.5}Co_{0.2}Mn_{0.3}O₂ | 100 | 3.05 |
| Comparative Example 2 | TiNb₂O₇ | 75 | 2.55 | LiNi_{0.5}Co_{0.2}Mn_{0.3}O₂ | 100 | 3.05 |

**[Table 2]**

| | Separator | Number of windings for electrode group |
|---|---|---|
| Example 1 | 15 µm thick PE separator | 100 |
| Example 2 | 15 µm thick PE separator | 100 |
| Example 3 | 15 µm thick PE separator | 100 |
| Example 4 | 15 µm thick PE separator | 100 |
| Example 5 | 15 µm thick PE separator | 100 |
| Example 6 | 15 µm thick PE separator | 100 |
| Example 7 | 15 µm thick PE separator | 100 |
| Example 8 | 15 µm thick PE separator | 100 |
| Example 9 | 15 µm thick PE separator | 100 |
| Example 10 | 15 µm thick PE separator | 100 |
| Example 11 | 15 µm thick PE separator | 100 |
| Example 12 | 15 µm thick PE separator | 80 |
| Example 13 | 15 µm thick PE separator | 84 |
| Comparative Example 1 | 15 µm thick PE separator | 100 |
| Comparative Example 2 | 15 µm thick PE separator | 100 |

**[Table 3]**

| | T_{PC} (mm) | T1 (mm) | T_{EG} (mm) | T_{EG} converted | First distance (mm) | Second distance (mm) |
|---|---|---|---|---|---|---|
| Example 1 | 22 | 1 | 20.6 | 1.03× (T_{PC}-T1×2) | 0.1 | -0.1 |
| Example 2 | 22.2 | 1 | 20.402 | 1.01× (T_{PC}-T1×2) | 0.05 | -0.05 |
| Example 3 | 21.8 | 1 | 20.79 | 1.05× (T_{PC}-T1×2) | 0.15 | -0.15 |
| Example 4 | 21.6 | 1 | 20.58 | 1.05× (T_{PC}-T1×2) | 0.6 | -0.6 |
| Example 5 | 22 | 1 | 20.6 | 1.03× (T_{PC}-T1×2) | 0.5 | -0.5 |
| Example 6 | 22 | 1 | 20.6 | 1.03× (T_{PC}-T1×2) | 0.3 | -0.3 |
| Example 7 | 22 | 1 | 20.4 | 1.02× (T_{PC}-T1×2) | 0.1 | -0.1 |
| Example 8 | 22 | 1 | 20.4 | 1.02× (T_{PC}-T1×2) | 0.1 | -0.1 |
| Example 9 | 22 | 1 | 20.6 | 1.03× (T_{PC}-T1×2) | 0.1 | -0.1 |
| Example 10 | 22 | 1 | 20.6 | 1.03× (T_{PC}-T1×2) | 0.1 | -0.1 |
| Example 11 | 22 | 1 | 20.6 | 1.03× (T_{PC}-T1×2) | 0.1 | -0.1 |
| Example 12 | 22 | 1 | 20.4 | 1.02× (T_{PC}-T1×2) | 0.1 | -0.1 |
| Example 13 | 22 | 1 | 20.6 | 1.03× (T_{PC}-T1×2) | 0.1 | -0.1 |
| Comparative Example 1 | 22.5 | 1 | 20.4 | 0.995× (T_{PC}-T1×2) | 0.25 | 0.25 |
| Comparative Example 2 | 22 | 1 | 21.2 | 1.06× (T_{PC}-T1×2) | 0.2 | -0.2 |

### <Evaluation>

The cycle life performance of each battery produced in Examples 1 to 13 and Comparative Examples 1 and 2 was evaluated. Specifically, a charge-discharge cycle test was performed as follows to measure a discharge cycle test was performed as follows to measure a discharge capacity retention ratio.

The battery was charged to an end-of-charge voltage at a constant current of 1 C in an environment of 35^{∘}C. The batteries produced in Examples 1 to 12 and Comparative Examples 1 and 2 were charged to an end-of-charge voltage of 3.0 V. The battery produced in Example 13 using LiNi_{0.5}Mn_{1.5}O₄ for the positive electrode active material was charged to an end-of-charge voltage of 3.5 V. Then, the battery was charged at a constant voltage at the end-of-charge voltage. Charge was completed when the current converged to a value corresponding to 0.05 C.

Thereafter, the battery was left in an open circuit state for 30 minutes. Then, the battery was discharged at a constant current of 1 C until the voltage reached 1.5 V.

A set of charge, leaving in an open circuit state, and discharge was defined as one charge-discharge cycle. This charge-discharge cycle was repeated 1000 times. The ratio (%) of the 1000th discharge capacity to the discharge capacity obtained in the first cycle was calculated. The obtained ratio was defined as a cycle discharge capacity retention ratio (discharge capacity retention ratio = {[1000th discharge capacity]/[1st discharge capacity]} × 100%), and used as an index of life performance.

The test results are shown in Table 4 below.

**[Table 4]**

| | 35°C, 1000 cycle discharge capacity retention ratio (%) |
|---|---|
| Example 1 | 91 |
| Example 2 | 88 |
| Example 3 | 93 |
| Example 4 | 92 |
| Example 5 | 91 |
| Example 6 | 90 |
| Example 7 | 90 |
| Example 8 | 88 |
| Example 9 | 91 |
| Example 10 | 90 |
| Example 11 | 90 |
| Example 12 | 92 |
| Example 13 | 88 |
| Comparative Example 1 | 80 |
| Comparative Example 2 | 83 |

As shown in Table 4, for each of the nonaqueous electrolyte batteries produced in Examples 1 to 13, the capacity retention ratio when 1000 cycles of charge and discharge were repeated was high, and excellent life performance was exhibited. In addition, in Examples 1 to 13, the thickness T_{EG} of the electrode group taken out from the battery had a value within a range of more than 1 × (T_{PC} - T1 × 2) and 1.05 × (T_{PC} - T1 × 2) or less. That is, the battery included an electrode group thicker than the thickness of the entire battery (the thickness T_{PC} of the prismatic container in a state in which the electrode group is housed), and thus had a high energy density.

In contrast, for the nonaqueous electrolyte battery produced in Comparative Example 1, the capacity retention ratio in the charge-discharge cycle was low, and the life performance was poor. In Comparative Example 1, the dimension of the electrode group was smaller than the inner dimension of the container member. Therefore, the space in the container member had a margin, and therefore there was room for deformation of the electrode group when the active material expanded and contracted in the charge-discharge cycle. Thus, it is presumed that the reaction distribution within the positive and negative electrodes in the electrode group became uneven and the deterioration was accelerated, or a minute short circuit between the positive and negative electrodes occurred, and self-discharge occurred. In addition, there was a margin in the space in the container member with respect to the size of the electrode group, and therefore the volume energy density can be considered not optimal.

According to at least one approach and example described above, a secondary battery is provided. The secondary battery includes an electrode group including a positive electrode and a negative electrode, and a container member housing the electrode group. The electrode group has a flat wound structure, which is formed by winding a stack including the positive electrode and the negative electrode. The negative electrode include a titanium-containing oxide. The container member includes a prismatic container. The prismatic container has a pair of principal walls along a principal surface of the electrode group. A thickness T_{PC} of the prismatic container with the electrode group housed therein, a wall thickness T1 of the prismatic container, and a thickness T_{EG} of the electrode group outside the prismatic container satisfy a relationship of 1 × (T_{PC} - T1 × 2) < T_{EG} ≤ 1.05 × (T_{PC} - T1 × 2). The above secondary battery can exhibit favorable life performance and high energy density, and can provide a battery pack that exhibits favorable life performance and high energy density, and a vehicle having the battery pack installed thereon.

The present disclosure also encompasses the following approaches of secondary batteries:
1. A secondary battery comprising: an electrode group, the electrode group comprising a positive electrode and a negative electrode that comprises a titanium-containing oxide, and having a flat wound structure where a stack comprising the positive electrode and the negative electrode is wound; and a container member housing the electrode group and having a pair of principal walls along a principal surface of the electrode group, the container member comprising a prismatic container, a thickness T_{PC} of the prismatic container housing the electrode group in a direction intersecting with the principal walls, a wall thickness T1 of the prismatic container, and a thickness T_{EG} of the electrode group in a state outside the prismatic container satisfying a relationship of 1 × (T_{PC} - T1 × 2) < T_{EG} ≤ 1.05 × (T_{PC} - T1 × 2) .
2. The secondary battery according to clause 1, wherein the pair of the principal walls of the prismatic container includes a first principal wall surface and a second principal wall surface facing outside the prismatic container, a first distance between a first center of the first principal wall surface and a first reference surface of the first principal wall surface is within a range of -0.6 mm or more and 0.2 mm or less, and a second distance between a second center of the second principal wall surface and a second reference surface of the second principal wall surface is within a range of -0.6 mm or more and 0.2 mm or less.
3. The secondary battery according to clause 1 or 2, wherein the negative electrode comprises: a negative electrode current collector comprising aluminum; and a negative electrode active material-containing layer provided on the negative electrode current collector, the negative electrode active material-containing layer comprising the titanium-containing oxide, and the titanium-containing oxide comprising a titanium-niobium composite oxide.
4. The secondary battery according to clause 3, wherein the titanium-niobium composite oxide comprises a compound represented by general formula LiₐTi₁₋ₓM1ₓNb_{2-y}M2_{y}O_{7-δ} where 0 ≤ a < 5, 0 ≤ x < 1, 0 ≤ y < 1, and -0.3 ≤ δ ≤ 0.3, an element M1 and an element M2 are each at least one selected from the group consisting of Mg, Fe, Ni, Co, W, Ta, and Mo, and the element M1 and the element M2 are the same as or different from each other.
5. The secondary battery according to any of clauses 1 to 4, wherein the positive electrode comprises: a positive electrode current collector comprising aluminum; and a positive electrode active material-containing layer provided on the positive electrode current collector, the positive electrode active material-containing layer comprising one or more selected from the group consisting of a lithium nickel cobalt manganese composite oxide, a lithium phosphorus oxide, and a lithium nickel manganese composite oxide.
6. The secondary battery according to any of clauses 1 to 5, wherein the prismatic container includes an aluminum metal can or an aluminum alloy can.
7. The secondary battery according to any of clauses 1 to 6, wherein a wall thickness T1 of the prismatic container is 0.1 mm or more and 1 mm or less.
8. A battery pack comprising the secondary battery according to any one of clauses 1 to 7.
9. The battery pack according to clause 8, further comprising: an external power distribution terminal; and a protective circuit.
10. The battery pack according to clause 8 or 9, comprising plural of the secondary battery, the secondary batteries being electrically connected in series, in parallel, or in combination of in-series connection and in-parallel connection.
11. A vehicle comprising the battery pack according to any one of clauses 8 to 10.
12. The vehicle according to clause 11, wherein the vehicle comprises a mechanism configured to convert kinetic energy of the vehicle into regenerative energy.

While certain approaches have been described, these approaches have been presented by way of example only, and are not intended to limit the scope of the claims. Indeed, the secondary batteries, battery packs, vehicles, and the like described herein may be embodied in a variety of other forms; furthermore, various omissions, substitutions and changes in the form of the secondary batteries, battery packs, vehicles, and the like described herein may be made.

## Claims

1. A secondary battery (100) comprising:
an electrode group (2), the electrode group (2) comprising a positive electrode (5) and a negative electrode (6) that comprises a titanium-containing oxide, and having a flat wound structure where a stack comprising the positive electrode (5) and the negative electrode (6) is wound; and
a container member (1) housing the electrode group (2) and having a pair of principal walls (30) along a principal surface (21) of the electrode group (2), the container member (1) comprising a prismatic container,
a thickness T_{PC} of the prismatic container housing the electrode group (2) in a direction intersecting with the principal walls (30), a wall thickness T1 of the prismatic container, and a thickness T_{EG} of the electrode group (2) in a state outside the prismatic container satisfying a relationship of 1 × (T_{PC} - T1 × 2) < T_{EG} ≤ 1.05 × (T_{PC} - T1 × 2) .

2. The secondary battery (100) according to claim 1, wherein the pair of the principal walls (30) of the prismatic container includes a first principal wall surface (31) and a second principal wall (32) surface facing outside the prismatic container, a first distance between a first center of the first principal wall surface (31) and a first reference surface of the first principal wall surface (31) is within a range of -0.6 mm or more and 0.2 mm or less, and a second distance between a second center of the second principal wall surface (32) and a second reference surface of the second principal wall surface (32) is within a range of -0.6 mm or more and 0.2 mm or less.

3. The secondary battery (100) according to claim 1 or 2, wherein the negative electrode (6) comprises:
a negative electrode current collector comprising aluminum; and
a negative electrode active material-containing layer (6b) provided on the negative electrode current collector, the negative electrode active material-containing layer (6b) comprising the titanium-containing oxide, and the titanium-containing oxide comprising a titanium-niobium composite oxide.

4. The secondary battery (100) according to claim 3, wherein the titanium-niobium composite oxide comprises a compound represented by general formula LiₐTi₁₋ₓM1ₓNb_{2-y}M2_{y}O_{7-δ} where 0 ≤ a < 5, 0 ≤ x < 1, 0 ≤ y < 1, and -0.3 ≤ δ ≤ 0.3, an element M1 and an element M2 are each at least one selected from the group consisting of Mg, Fe, Ni, Co, W, Ta, and Mo, and the element M1 and the element M2 are the same as or different from each other.

5. The secondary battery (100) according to any of claims 1 to 4, wherein the positive (5) electrode comprises:
a positive electrode current collector comprising aluminum; and
a positive electrode active material-containing layer (5b) provided on the positive electrode current collector, the positive electrode active material-containing layer (5b) comprising one or more selected from the group consisting of a lithium nickel cobalt manganese composite oxide, a lithium phosphorus oxide, and a lithium nickel manganese composite oxide.

6. The secondary battery (100) according to any of claims 1 to 5, wherein the prismatic container includes an aluminum metal can or an aluminum alloy can.

7. The secondary battery (100) according to any of claims 1 to 6, wherein a wall thickness T1 of the prismatic container is 0.1 mm or more and 1 mm or less.

8. A battery pack (300) comprising the secondary battery (100) according to any one of claims 1 to 7.

9. The battery pack (300) according to claim 8, further comprising:
an external power distribution terminal (350); and
a protective circuit (346).

10. The battery pack (300) according to claim 8 or 9, comprising plural of the secondary battery (100), the secondary batteries (100) being electrically connected in series, in parallel, or in combination of in-series connection and in-parallel connection.

11. A vehicle (400) comprising the battery pack (300) according to any one of claims 8 to 10.

12. The vehicle (400) according to claim 11, wherein the vehicle (400) comprises a mechanism configured to convert kinetic energy of the vehicle (400) into regenerative energy.
